(19) Europäisches Patentamt
European Patent Office
Office européen des brevets

(11) EP 0 993 476 B1

(12) EUROPÄISCHE PATENTSCHRIFT

(45) Veröffentlichungstag und Bekanntmachung des Hinweises auf die Patenterteilung:
**06.02.2002 Patentblatt 2002/06**

(21) Anmeldenummer: **98938632.1**

(22) Anmeldetag: **23.06.1998**

(51) Int Cl.[7]: **C08F 279/04**, C08L 51/06, C08L 55/02

(86) Internationale Anmeldenummer:
**PCT/EP98/03836**

(87) Internationale Veröffentlichungsnummer:
**WO 99/01489 (14.01.1999 Gazette 1999/02)**

(54) **THERMOPLASTISCHE FORMMASSEN MIT GERINGER EIGENFARBE**
LOW INDIVIDUAL COLOR THERMOPLASTIC MOLDING MATERIAL
MATIERE MOULABLE THERMOPLASTIQUE AYANT UNE FAIBLE COULEUR PROPRE

(84) Benannte Vertragsstaaten:
**BE DE ES FR GB IT NL**

(30) Priorität: **04.07.1997 DE 19728629**

(43) Veröffentlichungstag der Anmeldung:
**19.04.2000 Patentblatt 2000/16**

(73) Patentinhaber: **BASF AKTIENGESELLSCHAFT**
**67056 Ludwigshafen (DE)**

(72) Erfinder:
- **GÜNTHERBERG, Norbert**
**D-67346 Speyer (DE)**
- **KOCH, Jürgen**
**D-67141 Neuhofen (DE)**
- **ITTEMANN, Peter**
**D-68623 Lampertheim (DE)**
- **SEIBRING, Joachim**
**D-67251 Freinsheim (DE)**
- **GRABOWSKI, Sven**
**D-67061 Ludwigshafen (DE)**
- **MC KEE, Graham, Edmund**
**D-67433 Neustadt (DE)**
- **MOSBACH, Norbert**
**D-67133 Maxdorf (DE)**
- **HEINEN, Hartmut**
**D-68163 Mannheim (DE)**
- **CZAUDERNA, Bernhard**
**D-69493 Hirschberg (DE)**
- **NIESSNER, Norbert**
**D-67159 Friedelsheim (DE)**

(56) Entgegenhaltungen:
**EP-A- 0 665 095**
**EP-A- 0 745 624**
**DD-A- 71 615**
**EP-A- 0 712 895**
**WO-A-95/22570**
**US-A- 4 419 492**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft thermoplastische Formmassen, enthaltend als Komponenten A) bis F), bezogen auf das Gesamtgewicht der Formmasse,

A) 5 bis 80 Gew.-% eines Pfropfpolymerisates A) mit bimodaler Teilchengrößenverteilung aus, bezogen auf A),

a1) 40 bis 90 Gew.-% einer kautschukelastischen teilchenförmigen Pfropfgrundlage a1), erhältlich durch Polymerisation von, bezogen auf a1),

a11)70 bis 100 Gew.-% mindestens eines konjugierten Diens,

a12) 0 bis 30 Gew.-% mindestens eines weiteren monoethylenischen ungesättigten Monomeren und

a13) 0 bis 10, bevorzugt 0,01 bis 5 und besonders bevorzugt 0,02 bis 2 Gew.-% mindestens eines polyfunktionellen, vernetzenden Monomeren,

a2) 10 bis 60 Gew.-% einer Pfropfauflage a2) aus, bezogen auf a2),

a21) 65 bis 95 Gew.-% mindestens eines vinylaromatischen Monomeren,

a22) 5 bis 35 Gew.-% Acrylnitril,

a23) 0 bis 30 Gew.-% mindestens eines weiteren monoethylenisch ungesättigten Monomeren, und

a24) 0 bis 10, bevorzugt 0,01 bis 5 und besonders bevorzugt 0,02 bis 2 Gew.-% mindestens eines polyfunktionellen, vernetzenden Monomeren,

B) 20 bis 95 Gew.-% eines thermoplastischen Polymerisates B) mit einer Viskositätszahl VZ (ermittelt nach DIN 53726 bei 25°C, 0,5 Gew.-% in Dimethylformamid) von 50 bis 120 ml/g, aus, bezogen auf B),

b1) 69 bis 81 Gew.-% mindestens eines vinylaromatischen Monomeren

b2) 19 bis 31 Gew.-% Acrylnitril,

b3) 0 bis 30 Gew.-% mindestens eines weiteren, monoethylenisch ungesättigten Monomeren,

C) 0 bis 50 Gew.-% eines thermoplastischen Polymerisates C) mit einer Viskositätszahl VZ von 50 bis 120 ml/g, aus, bezogen auf C),

c1) 69 bis 81 Gew.-% mindestens eines vinylaromatischen Monomeren,

c2) 19 bis 31 Gew.-% Acrylnitril

c3) 0 bis 30 Gew.-% mindestens eines weiteren, monoethylenisch ungesättigten Monomeren,

wobei sich die Koponenten B) und C) in ihren Viskositätszahlen VZ um mindestens 5 Einheiten [ml/g] unterscheiden, oder sich in ihrem Acrylnitril-Gehalt um mindestens 5 Einheiten [Gew.-%] unterscheiden, oder sich in beiden Merkmalen Viskositatszahl VZ und Acrylnitril-Gehalt um mindestens 5 Einheiten unterscheiden,

D) 0 bis 95 Gew.-% eines thermoplastischen Polymerisates D) aus, bezogen auf D),

d1) 63 bis unter 69 Gew.-% mindestens eines vinylaromatischen Monomeren,

d2) über 31 bis 37 Gew.-% Acrylnitril,

d3) 0 bis 40 Gew.-% mindestens eines weiteren, monoethylenisch ungesättigten Monomeren,

E) 0 bis 50 Gew.-% eines thermoplastischen Polymerisates E) aus, bezogen auf E),

e1) 4 bis 96 Gew.-% mindestens eines vinylaromatischen Monomeren,

e2) 4 bis 96 Gew.-% mindestens eines Monomeren, ausgewählt aus Methylmethacrylat, Maleinsäureanhydrid und Maleinimiden,

e3) 0 bis 50 Gew.-% Acrylnitril,

wobei das Polymerisat E) von den Polymerisaten B) und, sofern enthalten, C) und D) verschieden ist,

F) 0 bis 50 Gew.-% Zusatzstoffe F),

erhältlich durch

1) Herstellen der Pfropfpolymerisate A) nach dem Verfahren der Emulsionspolymerisation,

2) Vermischen des Pfropfpolymerisates A) mit dem Polymerisat B) und, sofern enthalten, den weiteren Komponenten C), D), E) und/oder F), in einer Mischvorrichtung, wobei eine im wesentlichen schmelzflüssige Polymermischung entsteht,

3) schnelles Abkühlen der im wesentlichen schmelzflüssigen Polymermischung, in einem Zeitraum von bis zu 10 sec.

Außerdem betrifft die Erfindung Verfahren zur Herstellung der thermoplastischen Formmassen, die Verwendung der thermoplastischen Formmassen zur Herstellung von Formkörpern, und schließlich die aus den thermoplastischen Formmassen hergestellten Formkörper.

Formteile aus ABS (Polybutadienkautschuk-Partikel, gepfropft mit Polystyrolacrylnitril, in Polystyrolacrylnitril-Matrix) zeichnen sich durch gute mechanische Eigenschaften aus, beispielsweise hohe Festigkeit und Zähigkeit, insbesondere - bedingt durch die niedrige Glasübergangstemperatur Tg des Polybutadiens - durch gute Schlagzähigkeiten auch bei tiefen Temperaturen.

Jedoch haben ABS-Polymere, besonders solche, die durch Emulsionspolymerisation hergestellt werden, oftmals eine Eigenfarbe, beispielsweise gelblich bis bräunlich. Diese Eigenfarbe kann z.B. durch den Gelbindex (Yellowness Index YI) ausgedrückt werden, der für derartige ABS-Polymere mit deutlicher Eigenfarbe bei größer 30 bis weit über 50 liegt. Dabei hängt der Gelbindex YI von mehreren Faktoren, u. a. auch vom Kautschukgehalt des ABS, ab. Weiterhin können bei der Herstellung der Formmassen, deren Weiterverarbeitung zu Formteilen und beim Gebrauch der Formteile häufig z.B. gelblich-bräunliche Verfärbungen auftreten. Die Vergilbung bzw. Braunfärbung wird durch hohe Temperaturen begünstigt, wie sie z.B. bei der Spritzgußverarbeitung oder der Abmischung mit Zusatzstoffen auf einem Extruder auftreten, und ist umso deutlicher, je stärker die Eigenfarbe des unverarbeiteten ABS-Granulats vor dem Spritzguß bzw. vor der Extrusion ist. Insbesondere die Einfärbung der vergilbungsgefährdeten Polymere ist problematisch, da der Gelbstich den gewünschten Farbton verfälscht (mangelnde Farbtreue) oder die Verwendung größerer Mengen teurer Farbmittel erfordert (höhere Einfärbekosten). Weiterhin beobachtet man bei eingefärbten ABS-Formmassen oftmals eine geringe Farbtiefe, hervorgerufen durch eine hohe Lichtstreuung der Formmassen. Da für den Farbeindruck des Formteils das Ausgangsniveau der Eigenfarbe und die Farbtiefe des eingefärbten Formteils verantwortlich sind, wird durch die Eigenfarbe und die Vergilbung der Gebrauchswert der Formmassen vielfach gemindert.

Die EP-A 6341 lehrt die Verarbeitung eines Acrylnitril-Kautschuks in einem mit Inertgasen wie $N_2$ oder $CO_2$ gespülten Extruder, wodurch der Gelbstich des Polymeren vermindert wird. Der Betrieb eines Extruders unter Inertbedingungen ist nachteilig, da er das Verfahren aufwendig und kostenungünstig macht.

Die DE-AS 2503966 lehrt ABS-Formmassen, deren Farbstabilität durch die Mitverwendung eine $C_1$-$C_8$-Alkohols während der Emulsionspolymerisation des Butadiens verbessert wird. Das Ausmaß der Gelbstich-Verminderung ist jedoch nicht immer zufriedenstellend. Weiterhin kann der Alkohol bestimmte Eigenschaften der Formmassen nachteilig beeinflussen.

In der DE-AS 2427960 werden ABS-Formmassen offenbart, deren Kautschukteilchen durch Zugabe einer Agglomerierdispersion zum kleinteiligen Polybutadienlatex patiell agglomeriert wurden und dadurch eine breite oder bimodale Teilchengrößenverteilung aufweisen.

Die DE-OS 3505749 lehrt die Ausfällung von mit Styrol und Acrylnitril gepfropftem Polybutadienkautschuk aus seinem Latex durch Zufügen eines schwefelhaltigen Pfropfprodukts auf Basis von Polybutadien, wodurch die

Thermostabilität des ausgefällten und zu Formmasssen verabeiteten Polybutadienkautschuks verbessert wird. Jedoch führen die hohen Gehalte an Schwefel-Verbindungen oftmals zu einem unangenehmen Geruch der Formmassen.

In der EP-A 678531 werden ABS-Formmassen mit einem Polybutadien-Pfropfkautschuk mit bimodaler Teilchengrößenverteilung beschrieben, wobei die auf die Polybutadienteilchen aufgepfropften Monomere Styrol und Acrylnitril überwiegend während der ersten Hälfte der Monomerzulaufzeit zudosiert werden. Derartige ABS-Massen haben zwar eine hohe Zähigkeit und gute Verarbeitbarkeit, zeigen jedoch einen deutlichen Gelbstich.

Die WO 95/22570 offenbart ein Verfahren zur Herstellung eines ABS-Polymeren, bei dem ein kleinteiliger Kautschuklatex in Emulsion hergestellt, partiell agglomeriert, und der nunmehr bimodale Latex in Emulsion mit SAN gepfropft wird. Danach wird das Pfropfpolymere von der wässrigen Phase abgetrennt und mit einem SAN-Matrixpolymeren schmelzvermischt, wobei sich SAN-Pfropfhülle und SAN-Matrix in ihrem AN-Gehalt um nicht mehr als 6 Gew.-% unterscheiden. Bei der Entwässerung bzw. der Schmelzvermischung von Pfropfpolymeren und SAN-Matrix findet eine weitere, partielle Agglomeration der Pfropfpartikel statt. Auch derartige Formmassen zeigen eine nachteilige gelbliche Eigenfarbe.

Aus der EP-A 745 624 waren Formmassen vom ABS-Typ bekannt, die aus einer SAN-Matrix und mindestens einem Pfropfcopolymerisat aufgebaut sind, wobei das Pfropfcopolymerisat auf mindestens zwei Butadienkautschuken basiert. Letztere unterscheiden sich durch ihre Teilchendurchmesser und der Teilchengrößenverteilung sowie dem Gelgehalt. Ein Latex hat einen Teilchendurchmesser ($d_{50}$) von 320 nm oder darunter, eine relativ enge Teilchengrößenverteilung und einen Gelgehalt von 70 Gew.-% oder kleiner. Der andere Latex weist Teilchengrößendurchmesser ($d_{50}$) von mindestens 370 nm auf, hat eine breite Verteilung der Teilchengrößen und einen Gelgehalt von mindestens 70 Gew.-%.

Die Erfindung lag die Aufgabe zugrunde, den geschilderten Nachteilen abzuhelfen. Insbesondere sollten Formmassen bereitgestellt werden, die eine geringe Eigenfarbe haben, also ein geringes Ausgangsniveau des Gelbstiches, und außerdem eine geringe Vergilbungsneigung aufweisen. Insbesondere sollen die Formmassen auch nach längerer Wärmelagerung oder durch eine Verarbeitung in der Wärme (z.B. beim Spritzguß oder bei der Abmischung auf einem Extruder) kaum vergilben.

Außerdem bestand die Aufgabe, Formmassen mit guter Einfärbbarkeit bereitzustellen, die nach Einfärbung eine kleinstmögliche Abweichung des Ist-Farbtons von gewünschten Soll-Farbton aufweisen, und zu deren Einfärbung geringe Mengen an Farbmitteln ausreichen. Die eingefärbten Formmassen sollen eine hohe Farbtiefe aufweisen, weshalb die nicht eingefärbte Formmasse eine möglichst geringe Lichtstreuung haben soll.

Die aufgabengemäß gewünschte geringe Eigenfarbe ist durch einen Gelbwert (Yellowness Index YI) von $\leq$ 25, bzw. durch eine Absorption von < 0,1 % charakterisierbar. Die aufgabengemäß gewünschte hohe Farbtiefe, also geringe Lichtstreuung, ist durch Streuwerte < 4,9 charakterisierbar. Die genannten Zahlenwerte beziehen sich naturgemäß auf die nicht eingefärbte Formmasse und werden ermittelt, wie es in den Beispielen beschrieben ist.

Weiterhin bestand die Aufgabe, Formmassen bereitzustellen, deren geringe Eigenfarbe nicht auf Kosten ihrer anderen vorteilhaften Eigenschaften, beispielsweise mechanische Eigenschaften wie Zähigkeit und Steifigkeit, und ihrem Oberflächenglanzgrad, erzielt wird. Insbesondere bestand die Aufgabe, Formmassen bereitzustellen, deren mechanische Eigenschaften wie Zähigkeit, auch Kältezähigkeit, und Steifigkeit gegenüber den Formmassen des Standes der Technik sogar verbessert sind.

Demgemäß wurden die eingangs definierten thermoplastichen Formmassen gefunden. Außerdem wurden Verfahren zur Herstellung der thermoplastischen Formmassen, die Verwendung der thermoplastischen Formmassen zur Herstellung von Formkörpern, und schließlich die aus den thermoplastischen Formmassen hergestellten Formkörper gefunden.

Es versteht sich, daß sich die Summe der Komponenten A) bis F), bzw. die Summe der Monomeren a11) bis a13), bzw. die Summe der Monomeren a21) bis a24), bzw. die Summe der Monomeren b1) bis b3), bzw. die Summe der Monomeren c1) bis c3), bzw. die Summe der Monomeren d1) bis d3), bzw. die Summe der Monomeren e1) bis e3), jeweils zu 100 Gew.-% ergänzt.

Die Komponente A) ist ein Pfropfcopolymerisat mit bimodaler Teilchengrößenverteilung und ist in den erfindungsgemäßen Formmassen mit einem Anteil von 5 bis 80, bevorzugt 10 bis 70 und besonders bevorzugt 15 bis 60 Gew.-% enthalten, bezogen auf die Summe der Komponenten A) und B), und - sofern enthalten - C), D), E) und F). Das Pfropfpolymerisat A) ist aufgebaut aus einer "weichen" kautschukelastischen, teilchenförmigen Pfropfgrundlage a1), und einer "harten" Pfropfauflage a2).

Die Pfropfgrundlage a1) ist mit einem Anteil von 40 bis 90, bevorzugt 45 bis 85 und besonders bevorzugt 50 bis 80 Gew.-%, bezogen auf die Komponente A), enthalten.

Man erhält die Pfropfgrundlage a1) durch Polymerisation von, bezogen auf a1),

a11) 70 bis 100, bevorzugt 75 bis 100 und besonders bevorzugt 80 bis 100 Gew.-% mindestens eines konjugierten Diens,

a12) 0 bis 30, bevorzugt 0 bis 25 und besonders bevorzugt 0 bis 20 Gew.-% mindestens eines weiteren monoethylenisch ungesättigten Monomeren und

a13) 0 bis 10, bevorzugt 0,01 bis 5 und besonders bevorzugt 0,02 bis 2 Gew.-% mindestens eines polyfunktionellen, vernetzenden Monomeren.

Als konjugierte Diene a11) kommen Butadien, Isopren, Chloropren oder deren Mischungen in Betracht. Bevorzugt verwendet man Butadien oder Isopren oder deren Mischungen, ganz besonders Butadien.

Der Bestandteil a1) der Formmassen kann außerdem auf Kosten der Monomeren a11) weitere Monomere a12) enthalten, welche die mechanischen und thermischen Eigenschaften des Kerns in einem gewissen Bereich variieren. Als Beispiele für solche monoethylenisch ungesättigten Comonomere seien genannt:

vinylaromatische Monomere wie Styrol, Styrolderivate der allgemeinen Formel 1

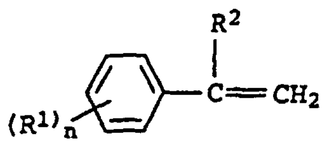

(I);

in der $R^1$ und $R^2$ für Wasserstoff oder $C_1$-$C_8$-Alkyl stehen und n gleich 0, 1, 2 oder 3 ist;

Methacrylnitril, Acrylnitril;

Acrylsäure, Methacrylsäure, weiterhin Dicarbonsäuren wie Maleinsäure und Fumarsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid;

$C_1$-$C_{10}$-Alkylester der Acrylsäure wie Methylacrylat, Ethylacrylat, n-Propylacrylat, i-Propylacrylat, n-Butylacrylat, Isobutyl-acrylat, sek.-Butylacrylat, tert.-Butylacrylat, Ethylhexylacrylat, und die entsprechenden $C_1$-$C_{10}$-Alkylester der Methacrylsäure, sowie Hydroxyethylacrylat;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

N-substituierte Maleinimide wie N-Methyl-, N-Phenyl- und N-Cyclohexylmaleinimid;

ungesättigte Ether wie Vinylmethylether

sowie Mischungen dieser Monomeren.

Bevorzugt werden Styrol, $\alpha$-Methylstyrol, n-Butylacrylat oder deren Mischungen als Monomere a12) verwendet, besonders bevorzugt Styrol und n-Butylacrylat oder deren Mischungen und ganz besonders bevorzugt Styrol. Styrol oder n-Butylacrylat oder deren Mischungen verwendet man insbesondere in Mengen von zusammengenommen bis zu 20 Gew.-%, bezogen auf a1).

Die Pfropfgrundlage a1) kann vernetzende Monomere a13) enthalten. Als polyfunktionelle, vernetzende Monomere a13) kommen Monomere mit mindestens zwei ethylenisch ungesättigten, nicht in 1,3-Stellung konjugierten Doppelbindungen in Betracht. Beispielhaft seien Triallylcyanurat, Divinylbenzol, Divinylester von Dicarbonsäuren wie Diallylmaleat, Diallylfumarat, Diallylphthalat, ebenso Allylacrylat und -methacrylat, Dihydrodicyclopentadienacrylat, Diallylether und Divinylether bifunktioneller Alkohole wie des Ethylenglycols und des 1,4-Butandiols, Diester mehrwertiger Alkohole mit Acryl- und Methacrylsäure wie beispielsweise Butandioldiacrylat, Ethylenglycoldiacrylat, Hexandioldimethacrylat genannt.

In einer besonderen Ausführungsform verwendet man eine Pfropfgrundlage aus, bezogen auf a1),

a11) 70 bis 99,9, bevorzugt 90 bis 99 Gew.-% Butadien, und

a12) 0,1bis 30, bevorzugt 1 bis 10 Gew.-% Styrol.

Die Pfropfauflage a2) ist mit einem Anteil von 10 bis 60, bevorzugt 15 bis 55 und besonders bevorzugt 20 bis 50 Gew.-%, bezogen auf die Komponente A), enthalten.
Man erhält die Pfropfauflage a2) durch Polymerisation von, bezogen auf a2),

a21) 65 bis 95, bevorzugt 70 bis 90 und besonders bevorzugt 75 bis 85 Gew.-% mindestens eines vinylaromatischen Monomeren,

a22) 5 bis 35, bevorzugt 10 bis 30 und besonders bevorzugt 15 bis 25 Gew.-% Acrylnitril,

a23) 0 bis 30, bevorzugt 0 bis 20 und besonders bevorzugt 0 bis 15 Gew.-% mindestens eines weiteren monoethylenisch ungesättigten Monomeren und

a24) 0 bis 10, bevorzugt 0,01 bis 5 und besonders bevorzugt 0,02 bis 2 Gew.-% mindestens eines polyfunktionellen, vernetzenden Monomeren.

Als vinylaromatische Monomere a21) kommen Styrol und Styrol-derivate der allgemeinen Formel (I)

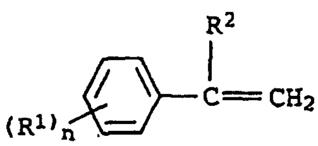

(I)

in der $R^1$ und $R^2$ für Wasserstoff oder $C_1$-$C_8$-Alkyl stehen und n gleich 0, 1, 2 oder 3 ist, in Betracht. Bevorzugt verwendet man Styrol.
Als weitere Monomere a23) kommen die weiter oben für die Komponente a12) genannten Monomere in Betracht. Insbesondere Methylmethacrylat und Acrylate wie n-Butylacrylat sind geeignet. Ganz besonders geeignet als Monomeres a23) ist Methylmethacrylat MMA, wobei eine Menge von bis zu 20 Gew.-% MMA, bezogen auf a2), bevorzugt ist.
Die Pfropfauflage a2) kann vernetzende Monomere a24) enthalten. Als polyfunktionelle, vernetzende Monomere a24) kommen die weiter oben für a13) genannten Monomere in Betracht.
Die Pfropfpolymerisate werden nach dem Verfahren der Emulsionspolymerisation hergestellt. Üblicherweise polymerisiert man bei 20 bis 100, bevorzugt 30 bis 80°C. In der Regel werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze, insbesondere die Na- und K-Salze, von Alkylsulfonaten oder Fettsäuren mit 10 bis 18 Kohlenstoffatomen.
In der Regel werden die Emulgatoren in Mengen von 0,5 bis 5 Gew.-%, insbesondere von 0,5 bis 3 Gew.-%, bezogen auf die bei der Herstellung der Pfropfgrundlage a1) eingesetzten Monomeren, eingesetzt.
Vorzugsweise verwendet man zur Herstellung der Dispersion soviel Wasser, daß die fertige Dispersion einen Feststoffgehalt von 20 bis 50 Gew.-% hat. Üblicherweise wird bei einem Wasser/Monomeren-Verhältnis von 2:1 bis 0,7:1 gearbeitet.
Zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.
In der Regel werden die Polymerisationsinitiatoren in einer Menge von 0,1 bis 1 Gew.-%, bezogen auf die Pfropfgrundlage-Monomeren a11) und a12), eingesetzt.
Die Radikalbildner und auch die Emulgatoren sowie ggf. die Molekulargewichtsregler (siehe nächster Absatz) werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion)

sein kann.

Ferner werden bevorzugt Molekulargewichtsregler wie z.B. Ethylhexylthioglycolat, n- oder t-Dodecylmercaptan oder andere Mercaptane, Terpinole und dimeres $\alpha$-Methylstyrol oder andere, zur Regelung des Molekulargewichts geeigneten Verbindungen, mitverwendet. Die Molekulargewichtsregler werden dem Reaktionsansatz diskontinuierlich oder kontinuierlich zugefügt, wie dies für die Radikalbildner und Emulgatoren zuvor beschrieben wurde.

Falls Molekulargewichtsregler bei der Polymerisation verwendet werden, so können sie bei der Herstellung der Pfropfgrundlage a1) oder bei der Herstellung der Pfropfauflage a2) oder bei der Herstellung von a1) und a2) in der zuvor beschriebenen Weise zugefügt werden. Bezüglich der Pfropfauflage werden weiter unten Einzelheiten genannt.

Zur Einhaltung eines konstant bleibenden pH-Wertes, der vorzugsweise bei 6 bis 9 liegt, kann man Puffersubstanzen wie $Na_2HPO_4/NaH_2PO_4$, Natriumhydrogencarbonat oder Puffer auf Basis Citronensäure/Citrat, mitverwenden. Regler und Puffersubstanzen werden in den üblichen Mengen eingesetzt, so daß sich nähere Angaben hierzu erübrigen.

In einer besonderen bevorzugten Ausführungsform fügt man während der Pfropfung der Pfropfgrundlage a1) mit den Monomeren a21) bis a23) ein Reduktionsmittel zu.

Man kann die Pfropfgrundlage in einer besonderen Ausführungsform auch durch Polymerisation der Monomeren a1) in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol. Besonders bevorzugt ist der Polystyrol-Saatlatex.

In einer anderen bevorzugten Ausführungsform kann man die Pfropfgrundlage a1) im sogenannten Zulaufverfahren herstellen. Bei diesem Verfahren wird ein bestimmter Anteil der Monomeren a1) vorgelegt und die Polymerisation gestartet, wonach man den Rest der Monomeren ("Zulaufanteil") a1) als Zulauf während der Polymerisation zufügt. Die Zulaufparameter (Gestalt des Gradienten, Menge, Dauer, etc.) hängen von den anderen Polymerisationsbedingungen ab. Sinngemäß gelten auch hier die zur Zugabeweise des Radikalstartes bzw. Emulgators gemachten Ausführungen. Bevorzugt beträgt beim Zulaufverfahren der vorgelegte Anteil der Monomeren a1) 5 bis 50, besonders bevorzugt 8 bis 40 Gew.-%, bezogen auf a1). Bevorzugt läßt man den Zulaufanteil von a1) innerhalb 1 - 18 Stunden, insbesondere 2 - 16 Stunden, ganz besonders 4 bis 12 Stunden, zulaufen.

Weiterhin eigenen sich auch Pfropfpolymerisate mit mehreren "weichen" und "harten" Schalen, z.B. des Aufbaus a1)-a2)-a1)-a2), oder a2)-a1)-a2), vor allem im Falle größerer Teilchen.

Die genauen Polymerisationsbedingungen, insbesondere Art, Menge und Dosierung des Emulgators und der anderen Polymerisationshilfsstoffe werden bevorzugt so gewählt, daß der erhaltene Latex des Pfropfpolymerisates A, eine mittlere Teilchengröße, definiert durch den $d_{50}$-Wert der Teilchengrößenverteilung, von 80 bis 800, bevorzugt 80 bis 600 und besonders bevorzugt 85 bis 400 aufweist.

Man stimmt die Reaktionsbedingungen so aufeinander ab, daß die Polymerisat-Teilchen eine bimodale Teilchengrößenverteilung aufweisen, also eine Größenverteilung mit zwei mehr oder weniger ausgeprägten Maxima. Das erste Maximum ist deutlicher ausgeprägt (vergleichsweise schmaler Peak) als das zweite und liegt in der Regel bei 25 bis 200, bevorzugt 60 bis 170 besonders bevorzugt 70 bis unter 150 nm. Das zweite Maximum ist vergleichsweise breit und liegt in der Regel bei 150 bis 800, bevorzugt 180 bis 700, besonders bevorzugt 200 bis 600 nm. Dabei liegt das zweite Maximum (150 bis 800 nm) bei größeren Teilchengrößen als das erste Maximum (25 bis 200 nm).

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren a1), welche den Kern aufbauen, bis zu einem Umsatz von üblicherweise mindestens 90, bevorzugt größer 95 %, bezogen auf die eingesetzten Monomeren. Dieser Umsatz ist in der Regel nach 4 bis 20 Stunden erreicht. Der erhaltene Kautschuklatex hat eine mittlere Teilchengröße $d_{50}$ von maximal 200 nm, bevorzugt unter 150 nm, und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates. Vorzugsweise werden Dispersionen von Copolymerisaten von ($C_1$-$C_4$-Alkyl) estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 90 bis 96 Gew.-% Ethylacrylat und 4 bis 10 Gew.-% Methacrylamid. Die Agglomerierdispersion kann gegebenenfalls auch mehrere der genannten Acrylesterpolymerisate enthalten.

Die Konzentration der Acrylesterpolymerisate in der zur Agglomeration verwendeten Dispersion soll im allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 60 Minuten bei einer Temperatur zwischen 20 und 90°C, vorzugsweise zwischen 30 und 75°C.

Außer mittels einer Acrylesterpolymerisat-Dispersion kann der Kautschuklatex auch durch andere Agglomeriermittel wie z.B. Essigsäureanhydrid, agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so daß eine bimodale Verteilung entsteht. Dabei liegen nach der Agglomeration im allgemeinen mehr als 40, vorzugsweise zwischen 45 und 95 % der Teilchen (Zahlen-Verteilung) im nicht agglomerierten Zustand vor. Der erhaltene teilagglomerierte Kautschuklatex ist verhältnismäßig stabil, so daß er ohne weiteres gelagert und transportiert werden kann, ohne daß Koagulation eintritt.

Um eine bimodale Teilchengrößenverteilung des Pfropfpolymerisates A) zu erzielen, ist es auch möglich, zwei verschiedene Pfropfpolymerisate A') und A''), die sich in ihrer mittleren Teilchengröße unterscheiden, getrennt voneinander in üblicher Weise herzustellen und die Pfropfpolymerisate A') und A'') im gewünschten Mengenverhältnis zusammenzugeben.

Üblicherweise wird die Polymerisation der Pfropfgrundlage a1) durch Wahl der Reaktionsbedingungen so geführt, daß eine Pfropfgrundlage mit einem bestimmten Vernetzungszustand resultiert. Als hierfür wesentliche Parameter sind beispielhaft anzuführen die Reaktionstemperatur und -dauer, das Verhältnis von Monomeren, Regler, Radikalstarter und beispielsweise beim Zulaufverfahren, die Zulaufgeschwindigkeit und die Menge und der Zugabezeitpunkt von Regler und Initiator.

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI der erfindungsgemäßen Formmassen im Bereich QI = 10 bis 60, bevorzugt bei 15 bis 55 und besonders bevorzugt bei 20 bis 50.

Eine andere Methode zur Charakterisierung des Vernetzungszustandes ist die Messung von NMR-Relaxationszeiten der beweglichen Protonen, die sog. $T_2$-Zeiten. Je stärker vernetzt ein bestimmtes Netzwerk ist, desto niedriger liegen seine $T_2$-Zeiten. Übliche $T_2$-Zeiten für die erfindungsgemäßen Pfropfgrundlagen a1) sind $T_2$-Zeiten im Bereich 2,0 bis 5,0 ms, bevorzugt 2,5 bis 4,5 ms und besonders bevorzugt 2,5 bis 4,0 ms, gemessen an verfilmten Proben bei 80°C.

Ein weiteres Maß für die Charakterisierung der Pfropfgrundlage und deren Vernetzungszustand ist der Gelgehalt, d.h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt. Übliche Gelgehalte der erfindungsgemäßen Pfropfgrundlagen a1) liegen im Bereich 50 bis 90 %, bevorzugt 55 bis 90 % und besonders bevorzugt 60 bis 85 %.

Die Bestimmung des Quellungsindex geschieht beispielsweise nach folgendem Verfahren: ca. 0,2 g des Feststoffes einer durch Verdampfen des Wassers verfilmten Pfropfgrundlagendispersion werden in einer genügend großen Menge (z.B. 50 g) Toluol angequollen. Nach z.B. 24 h wird das Toluol abgesaugt und die Probe ausgewogen. Nach Trocknen der Probe im Vakuum wird erneut ausgewogen. Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trockenauswaage nach dem Quellschritt zur Einwaage vor dem Quellschritt (x 100 %)

Die Bestimmung der $T_2$-Zeit geschiegt durch Messen der NMR-Relaxation einer entwässerten und verfilmten Probe der Pfropfgrundlagendispersion. Hierzu wird beispielsweise die Probe nach Ablüften über Nacht bei z,B. 60°C 3 h im Vakuum getrocknet und dann mit einem geeigneten Meßgerät, z.B. minispec-Gerät der Fa. Brucker, bei 80°C vermessen. Vergleichbar sind nur Proben, die nach der gleichen Methode vermessen wurden, da die Relaxation deutlich temperaturabhängig ist.

Die Herstellung der Pfropfauflage a2) kann unter den gleichen Bedingungen wie die Herstellung der Pfropfgrundlage a1) erfolgen, wobei man die Auflage a2) in einem oder mehreren Verfahrensschritten herstellen kann. Beispielsweise kann man bei einer zweistufigen Pfropfung zunächst Styrol bzw. $\alpha$-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfpolymerisate A) sind in der DE-OS 12 60 135 und DE-OS 31 49 358 beschrieben.

Es ist vorteilhaft, die Pfropfpolymerisation auf die Pfropfgrundlage a1) wiederum in wäßriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage a1) verwendeten Emulgatoren bzw. Initiatoren nicht identisch sein. So kann z.B. zweckmäßig sein, als Initiator für die Herstellung der Pfropfgrundlage a1) ein Persulfat zu verwenden, zur Polymerisation der Pfropfhülle a2) jedoch ein Redoxinitiatorsystem einzusetzen. Im übrigen gilt für die Wahl von Emulgator, Initiator und Polymerisationshilfsstoffen das bei der Herstellung der Pfropfgrundlage a1) gesagte. Das aufzupfropfende Monomerengemisch kann dem Reaktionsgemisch auf einmal, absatzweise in mehreren Stufen oder vorzugsweise kontinuierlich während der Polymerisation zugegeben werden.

Zur Einstellung der gewünschten Eigenschaften kann es vorteilhaft sein, bei der Polymerisation der Pfropfauflage a2) vernetzende Monomere a24) und Molekulargewichtsregler, wie sie bereits beschrieben wurden, zuzufügen.
Falls für die Pfropfauflage a2) Molekulargewichtsregler mitverwendet werden, betragen die Mengen 0,001 bis 5, bevorzugt 0,005 bis 2 und besonders bevorzugt 0,01 bis 2 Gew.-%, bezogen auf die Monomeren a21) bis a24). Die Regler werden entweder zu Beginn der Pfropfreaktion oder zu einem späteren Zeitpunkt auf einmal, oder in mehreren Stufen zu gleichen oder verschiedenen Teilen gleichmäßig über die Zulaufdauer verteilt, oder gemeinsam mit den Pfropfmonomeren a21) bis a24) über die gesamte Zulaufdauer oder während eines bestimmten Zeitabschnittes der Zulaufdauer zugegeben. Näheres zur Zugabeweise wurde bereits bei a1) gesagt.
In der weiter oben beschriebenen Ausführungsform der Herstellung der Pfropfauflage a2) in zwei Stufen kann man beispielsweise in der ersten Stufe einen Regler zufügen, und in der zweiten Stufe einen Vernetzer a24), oder umgekehrt. Man kann ebenso in beiden Stufen sowohl Regler aus auch Vernetzer mitverwenden, wobei das Mengenverhältnis Regler/Vernetzer a24) in den Stufen gleich oder verschieden sein kann.
Für die Zugabeweise von Regler und Vernetzer bei der Herstellung von Pfropfgrundlage a1) und -auflage a2) gilt das weiter oben Gesagte, wobei beide Stoffe gleichartig oder auf verschiedene Weise dosiert werden können.
Soweit bei der Pfropfung der Pfropfgrundlage a1) nicht gepfropfte Polymere aus den Monomeren a2) entstehen, werden die Mengen, die in der Regel unter 20, bevorzugt unter 15 Gew.-% von a2) liegen, der Masse der Komponente A) zugeordnet.
Die Komponente B) ist ein thermoplastisches Polymerisat und ist in den erfindungsgemäßen Formmassen mit einem Anteil von 20 bis 95, bevorzugt 30 bis 90 und besonders bevorzugt 40 bis 85 Gew.-% enthalten, bezogen auf die Summe der Komponenten A) und B), und - sofern enthalten - C), D), E) und F).
Man erhält die Komponente B) durch Polymerisation von, bezogen auf B),

b1) 69 bis 81, bevorzugt 70 bis 78 und besonders bevorzugt 70 bis 77 Gew.-%, mindestens eines vinylaromatischen Monomeren

b2) 19 bis 31, bevorzugt 22 bis 30 und besonders bevorzugt 23 bis 30 Gew.-% Acrylnitril

b3) 0 bis 30 bevorzugt 0 bis 28 mindestens eines weiteren, monoethylenisch ungesättigten Monomeren.

Als vinylaromatische Monomere b1) kommen Styrol und Styrolderivate der allgemeinen Formel (I), wie sie für die Komponente a21) beschrieben ist, in Betracht. Bevorzugt verwendet man Styrol und/ oder α-Methylstyrol.
In einer bevorzugten Ausführungsform besteht die Pfropfauflage a2) des Pfropfpolymerisats A) im wesentlichen aus, bezogen auf A2,

a21) 75 bis 85 Gew.-% Styrol und/oder α-Methylstyrol
a22) 15 bis 25 Gew.-% Acrylnitril,
und das thermoplastische Polymerisat B) im wesentlichen aus, bezogen auf B),
b1) 71 bis 78 Gew.-% Styrol, und
b2) 22 bis 29 Gew.-% Acrylnitril.

In einer besonderen Ausführungsform besteht die Komponente B) aus zwei Polymerisaten B') und B"). Dabei entspricht das Polymerisat B') dem zuvor beschriebenen Polymerisat B), wobei als vinylaromatische Monomere b1') nur solche der Formel (I) mit $R^1$ und $R^2$ gleich Wasserstoff verwendet werden, also nicht-alkylierte Vinylaromaten. Bevorzugt wird als Monomer b1') in B') Styrol verwendet.
Das Polymerisat B") entspricht dem zuvor beschriebenen Polymerisat B), wobei als vinylaromatische Polymere b1") nur solche der Formel (I) mit $R^1$ und $R^2$ gleich $C_1$-$C_8$-Alkylrest verwendet werden, also alkylierte Vinylaromaten. Bevorzugt wird als Monomeres b1") in B") α-Methylstyrol verwendet.
Bevorzugt handelt es sich beim Polymeren B") um eine α-Methyl-Styrol-Acrylnitril-Copolymeres. Besonders bevorzugt besteht die Komponente B), falls sie zwei Komponenten B') und B"') enthält, aus einem Styrol-Acrylnitril-Copolymeren B') und einem α-Methyl-styrol-Acrylnitril-Copolymeren B").
Falls B) aus B') und B") besteht, liegt das Verhältnis B') / B") zwischen 99:1 und 1:99, bevorzugt 95:5 und 5:95.
Als weitere Monomere b3) können die weiter oben für die Komponente a12) genannten Monomere verwendet werden. Insbesondere sind Methylmethacrylat und N-Alkyl- bzw. N-Arylmaleinimide, wie z.B. N-Phenylmaleinimid geeignet.
Die Polymeren B), die wegen ihrer Hauptkomponenten Styrol und Acrylnitril allgemein auch als SAN-Polymere bezeichnet werden, sind bekannt und z.T. auch handelsüblich.
Die Komponente B) hat eine Viskositätszahl VZ (ermittelt nach DIN 53 726 bei 25°C, an einer 0,5 Gew.-%igen Lösung der Komponente B) in Dimethylformamid) von 50 bis 120, bevorzugt 52 bis 110 und besonders bevorzugt 55

bis 105 ml/g. Man erhält sie in bekannter Weise durch Masse-, Lösungs-, Suspensions-, Fällungs- oder Emulsionspolymerisation, wobei Masse- und Lösungspolymerisation bevorzugt sind. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Die Komponente C) ist ebenfalls ein thermoplastisches Polymerisat und ist in den erfindungsgemäßen Formmassen mit einem Anteil von 0 bis 50, bevorzugt 0 bis 48 und besonders bevorzugt 0 bis 45 Gew.-% enthalten, bezogen auf die Summe der Komponenten A) und B), und - sofern enthalten - C), D), E) und F).

Man erhält die Komponente C) durch Polymerisation von, bezogen auf C),

c1) 69 bis 81, bevorzugt 71 bis 78 und besonders bevorzugt 72 bis 77 Gew.-%, mindestens eines vinylaromatischen Monomeren,

c2) 19 bis 31, bevorzugt 22 bis 29 und besonders bevorzugt 23 bis 28 Gew.-% Acrylnitril, und

c3) 0 bis 40 bevorzugt 0 bis 30 mindestens eines weiteren, monoethylenisch ungesättigten Monomeren.

Als vinylaromatische Monomere c1) kommen Styrol und Styrolderivate der allgemeinen Formel (I), wie sie für die Komponente a21) beschrieben ist, in Betracht. Bevorzugt verwendet man Styrol. Als weitere Monomere c3) können die weiter oben für die Komponente a12) genannten Monomere verwendet werden. Insbesondere sind Methylmethacrylat, Maleinsäureanhydrid und N-Phenylmaleinimid geeignet.

Die Komponente C) hat eine Viskositätszahl VZ von 50 bis 120, bevorzugt 52 bis 110 und besonders bevorzugt 55 bis 105 ml/g. Man erhält sie in bekannter Weise durch Masse-, Lösungs-, Suspensions-, Fällungs- oder Emulsionspolymerisation wobei Masse- und Lösungspolymerisation bevorzugt sind. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Bei den Komponenten B) und C) handelt es sich demnach um Polymere vom SAN-Typ, die vergleichsweise wenig Acrylnitril (maximal 31 Gew.-%) einpolymerisiert enthalten. Erfindungsgemäß unterscheiden sich B) und C)

- entweder darin, daß sich die Viskositätszahlen VZ von B) und C) um mindestens 5 Einheiten [ml/g] unterscheiden (in diesem Fall sind die mittleren Molmassen M von B) und C) voneinander verschieden),

- oder darin, daß sich die Acrylnitril-Gehalte von B) und C) (Monomere b2) bzw. c2)) um mindestens 5 Einheiten [Gew.-%] unterscheiden,

- oder in beiden vorgenannten Merkmalen Viskositätszahl VZ und Acrylnitril-Gehalt um mindestens 5 Einheiten.

Die Komponente D) ist gleichfalls ein thermoplastisches Polymerisat und ist in den erfindungsgemäßen Formmassen mit einem Anteil von 0 bis 95, bevorzugt 0 bis 80 und besonders 0 bis 70 Gew.-% enthalten, bezogen auf die Summe der Komponenten A) und B), und - sofern enthalten - C), D), E) und F). Man erhält die Komponente D) durch Polymerisation von, bezogen auf D),

d1) 63 bis unter 69, bevorzugt 64 bis 68 Gew.-% mindestens eines vinylaromatischen Monomeren,

d2) über 31 bis 37, bevorzugt 32 bis 36 Gew.-% Acrylnitril,

d3) 0 bis 40, bevorzugt 0 bis 30 Gew.-% mindestens eines weiteren, monoethylenisch ungesättigten Monomeren.

Als vinylaromatische Monomere d1) kommen Styrol und Styrolderivate der allgemeinen Formel (I), wie sie für die Komponente a21) beschrieben ist, in Betracht. Bevorzugt verwendet man Styrol und/oder $\alpha$-Methylstyrol, insbesondere Styrol. Als weitere Monomere d3) können die weiter oben für die Komponente a21) genannten Monomere verwendet werden. Insbesondere sind Methylmethacrylat, Maleinsäureanhydrid, N-Phenylmaleinimid und andere N-substituierte Maleinimide geeignet.

Die Komponente D) ist demnach ebenso wie die Komponenten B) und C) ein SAN-Polymeres, unterscheidet sich jedoch von B) und C) durch einen geringen Gehalt an vinylaromatischen Monomeren d1) bzw. einen höheren Gehalt an Acrylnitril d2) ( über 31 Gew.-%).

Die Komponente D) hat in der Regel eine Viskositätszahl VZ von 55 bis 110, bevorzugt 56 bis 105 und besonders bevorzugt 58 bis 103 ml/g. Man erhält die Komponente D) in bekannter Weise durch Masse-, Lösungs-, Suspensions-, Fällungs- oder Emulsionspolymerisation. Einzelheiten dieser Verfahren sind z.B. im Kunststoffhandbuch,

Hrg. R. Vieweg und G. Daumiller, Bd. V "Polystyrol", Carl-Hanser-Verlag München 1969, S. 118 ff beschrieben.

Die Komponente E) ist ebenfalls ein thermoplastisches Polymerisat und ist in den erfindungsgemäßen Formmassen mit einem Anteil von 0 bis 50, bevorzugt 0 bis 40 und besonders bevorzugt 0 bis 30 Gew.-% enthalten, bezogen auf die Summe der Komponenten A) und B), und - sofern enthalten - C), D), E) und F). Man erhält die Komponente E) durch Polymerisation von, bezogen auf E),

e1) 4 bis 96, bevorzugt 8 bis 92 und besonders bevorzugt 10 bis 90 Gew.-%, mindestens eines vinylaromatischen Monomeren,

e2) 4 bis 96, bevorzugt 8 bis 92 und besonders bevorzugt 10 bis 90 Gew.-%, mindestens eines Monomeren, ausgewählt aus Maleinsäureanhydrid, Maleinimiden, ($C_1$ -$C_{20}$ -Alkyl) acrylaten und ($C_1$-$C_{20}$-Alkyl)methacrylaten,

e3) 0 bis 50, bevorzugt 0 bis 40 und besonders bevorzugt 0 bis 30 Gew.-% Acrylnitril.

Als vinylaromatische Monomere e1) kommen Styrol und Styrolderivate der allgemeinen Formel (I), wie für a21) beschrieben, in Betracht. Bevorzugt verwendet man Styrol und/oder α-Methylstyrol. Bei den ($C_1$-$C_{20}$-Alkyl) methacrylaten (eines der Monomere e2)) ist Methylmethacrylat MMA bevorzugt. Besonders bevorzugt handelt es sich bei der Komponente E) um Copolymere aus Styrol und Maleinsäureanhydrid, oder aus Styrol und Maleinimiden, oder aus Styrol, Maleinimiden und MMA, oder aus Styrol, Maleinimiden und Acrylnitril, oder aus Styrol, Maleinimiden, MMA und Acrylnitril.

Erfindungsgemäß werden die Monomere e1) bis e3) so ausgewählt , daß das Polymerisat E) von den Polymerisaten B) und, sofern in den Formmassen gleichfalls enthalten, C) und D), verschieden ist. Die Polymere E) können dazu dienen, die Wärmeformbeständigkeit der thermoplastischen Formmassen zu erhöhen.

Die Komponente E) hat in der Regel eine Viskositätszahl VZ von 50 bis 120, bevorzugt 55 bis 110 ml/g. Man erhält die Komponente E) in bekannter Weise durch Masse-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Die Komponente F) sind Zusatzstoffe, die mit einem Anteil von 0 bis 50, bevorzugt 0,1 bis 45 und besonders bevorzugt 0,2 bis 30 Gew.-%, bezogen auf die Summe der Komponenten A) und B), und - sofern enthalten - C), D), E) und F), in den erfindungsgemäßen thermoplastischen Formmassen enthalten sind.

Die Komponente F) umfaßt Gleit- oder Entformungsmittel, Wachse, Pigmente, Farbstoffe, Flammschutzmittel, Antioxidantien, Stabilisatoren gegen Lichteinwirkung und Hitzeeinwirkung, Mattierungsmittel zur Erzielung einer matten Formteiloberfläche, Antitropfmittel, faser- und pulverförmige Füll- oder Verstärkungsmittel oder Antistatika, sowie andere übliche Zusatzstoffe, wie sie z.B. im "Plastics Additives Handbook", Ed. Gächter and Müller, 4th edition, Hanser Publ., Munich, 1996, beschrieben sind, oder deren Mischungen. Nachstehend werden einige Beispiele genannt:

Geeignete Gleit- und Entformungsmittel sind z.B. Stearinsäuren, Stearylalkohol, Stearinsäureester oder -amide sowie Siliconöle, Montanwachse und solche auf Basis von Polyethylen und Polypropylen.

Pigmente sind beispielsweise Titandioxid, Phthalocyanine, Ultramarinblau, Eisenoxide oder Ruß, sowie die gesamte Klasse der organischen Pigmente.

Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden. Ebenso ist roter Phosphor geeignet.

Geeignete Antioxidantien sind insbesondere sterisch gehinderte einkernige oder mehrkernige phenolische Antioxidantien, die auf verschieden Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinonanaloge, substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, etwa Topanol® oder Irganox® .

Zusammen mit den zuvor beispielhaft genannten phenolischen Antioxidantien können sogenannte Costabilisatoren mitverwendet werden, insbesondere phosphor- oder schwefelhaltige Costabilisatoren. Solche P- oder S-haltigen Costabilisatoren sind dem Fachmann bekannt und handelsüblich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Als Mattierungsmittel kommen sowohl anorganische Stoffe wie Talkum, Glaskugeln oder Metallcarbonate (wie $MgCO_3$, $CaCO_3$) in Betracht, als auch Polymer-Partikel - insbesondere sphärische Partikel mit Durchmessern $d_{50}$ (Gewichtsmittel) über 1 μm - auf 5 Basis von z.B. Methylmethacrylat, Styrolverbindungen, Acrylnitril oder deren Mischungen. Ferner kann man auch Polymere verwenden, die saure und/oder basische Monomere einpolymerisiert enthalten.

Geeignete Antitropfmittel sind beispielsweise Polytetrafluorethylen (Teflon®)-Polymere und ultrahochmolekulares Polystyrol (Molmasse $M_W$ über 2 000 000).

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann ) sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester, Copolymere aus Ethylenoxid und Propylenoxid (insbesondere Zweiblock- oder Dreiblockcopolymere aus Ethylenoxid- und Propylenoxid-Blöcken) und Glycerinmono- und -distearate, sowie deren Mischungen.

Die einzelnen Zusatzstoffe werden in den jeweils üblichen Mengen verwendet, so daß sich nähere Angaben hierzu erübrigen.

Zur Herstellung der thermoplastischen Formmassen ist im einzelnen das Folgende zu sagen:

Die Pfropfpolymerisate mit bimodaler Teilchengrößenverteilung werden nach dem Verfahren der Emulsionspolymerisation hergestellt, wie es bereits bei der Komponente A) beschrieben wurde. Die bimodale Teilchengrößenverteilung wird, wie bereits beschrieben, durch geeignete Maßnahmen eingestellt. Dabei ist die erwähnte (Teil)Agglomeration der Polymerteilchen, durch Zugabe einer agglomerierend wirkenden Dispersion eines Acrylesterpolymerisates, bevorzugt. Es können stattdessen oder in Kombination mit der (Teil)Agglomeration andere geeignete, dem Fachmann geläufige Maßnahmen ergriffen werden, um die bimodale Teilchengrößenverteilung einzustellen.

Die erhaltene Dispersion des Pfropfpolymerisates A) kann entweder direkt mit den Komponenten B) bis F) vermischt werden, oder sie kann zuvor aufgearbeitet werden. Letzteres Vorgehen ist bevorzugt.

Die Aufarbeitung der Dispersion des Pfropfpolymerisates A) erfolgt in an sich bekannter Weise. Üblicherweise wird zunächst das Pfropfpolymerisat A) aus der Dispersion ausgefällt, beispielsweise durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation). Auch eine Ausfällung durch hohe Scherkräfte, die sog. Scherfällung, ist möglich, wobei die hohen Scherkräfte beispielsweise durch Rotor/Stator-Systeme oder Hindurchpressen der Dispersion durch einen engen Spalt erzeugt werden. Die wäßrige Phase kann in üblicher Weise, etwa durch Sieben, Filtrieren, Dekantieren oder Zentrifugieren, abgetrennt werden. Man erhält durch diese vorherige Abtrennung des Dispersionswassers wasserfeuchte Pfropfpolymerisate A) mit einem Restwassergehalt von bis zu 60 Gew.-%, bezogen auf A), wobei das Restwasser z.B. sowohl am Pfropfpolymerisat äußerlich anhaften als auch darin eingeschlossen sein kann.

Das Pfropfpolymerisat kann danach erforderlichenfalls in bekannter Weise weiter getrocknet werden, z.B, durch Warmluft oder mittels eines Stromtrockners. Ebenso ist es möglich, die Dispersion durch Sprühtrocknung aufzuarbeiten.

Die Pfropfpolymerisate A) werden erfindungsgemäß mit dem Polymerisat B) und, sofern enthalten, den weiteren Komponenten C), D), E) und/oder F), in einer Mischvorrichtung vermischt, wobei eine im wesentlichen schmelzflüssige Polymermischung entsteht.

"Im wesentlichen schmelzflüssig" bedeutet, daß die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Metallflocken, oder auch ungeschmolzene Pigmente, Farbstoffe etc. "Schmelzflüssig" bedeutet, daß die Polymermischung zumindest zähflüssig ist, sie also zumindest in dem Maß erweicht ist, daß sie plastische Eigenschaften hat.

Als Mischvorrichtungen werden solche verwendet, die dem Fachmann bekannt sind. Man kann die Komponenten A) und B), und - sofern enthalten - C), D), E) und F) beispielsweise durch gemeinsames Extrudieren, Kneten oder Verwalzen vermischen, wobei die Komponenten A) bis F) notwendigenfalls zuvor aus der bei der Polymerisation erhaltenen Lösung oder aus der wäßrigen Dispersion isoliert worden sind.

Im Falle des Einmischens einer oder mehrerer Komponenten in Form einer wäßrigen Dispersion bzw. einer wäßrigen oder nichtwäßrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des erfindungsgemäßen Verfahrens sind beispielsweise diskontinuierlich arbeitende, beheizte Innenkneter mit oder ohne Stempel, kontinuierlich arbeitende Kneter wie z.B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.
Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.
In manchen Fällen bewirkt die beim Vermischen durch die Mischvorrichtung eingebrachte mechanische Energie bereits ein Schmelzen der Mischung, sodaß die Mischvorrichtung nicht beheizt werden muß. Ansonsten wird die Mischvorrichtung in der Regel beheizt. Die Temperatur richtet sich nach den chemischen und physikalischen Eigenschaften der Komponenten A) und B), und - sofern enthalten - C), D), E) und F), und ist so zu wählen, daß eine im wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, daß die Mischvorrichtung sogar gekühlt werden muß. Üblicherweise betreibt man die Mischvorrichtung bei 150 bis 300, bevorzugt 180 bis 300°C.
In einer bevorzugten Ausführungsform erfolgt das Vermischen des Pfropfpolymerisates A) mit dem Polymerisat B) und, sofern enthalten, den weiteren Komponenten C), D); E) und/oder F), in einem Extruder, wobei die Dispersion des Pfropfpolymerisates A) ohne vorherige Abtrennung des Dispersionswassers direkt in den Extruder eindosiert wird. Das Wasser wird üblicherweise entlang des Extruders über geeignete Entgasungsvorrichtungen entfernt. Als Entgasungsvorrichtungen können beispielsweise Entgasungsöffnungen, die mit Rückhalteschnecken versehen sind (welche das Austreten der Polymermischung verhindern), eingesetzt werden.
In einer anderen, ebenfalls bevorzugten Ausführungsform erfolgt das Vermischen des Pfropfpolymerisates A) mit dem Polymerisat B) und, sofern enthalten, den weiteren Komponenten C), D), E) und/ oder F), in einem Extruder, wobei das Pfropfpolymerisat A) zuvor z.B. durch Sieben, Filtrieren, Dekantieren oder Zentrifugieren vom Dispersionswasser abgetrennt wird. Man erhält durch diese vorherige Abtrennung des Dispersionswassers wasserfeuchte Pfropfpolymerisate A) mit einem Restwassergehalt von bis zu 60 Gew.-%, bezogen auf A), wobei das Restwasser z.B. sowohl am Pfropfpolymerisat äußerlich anhaften als auch darin eingeschlossen sein kann. Das vorhandene Restwasser kann dann, wie zuvor beschrieben, über Entgasungseinrichtungen des Extruders als Dampf entfernt werden.
In einer besonders bevorzugten Ausführungsform wird jedoch das Restwasser im Extruder nicht allein als Dampf entfernt, sondern es wird ein Teil des Restwassers mechanisch im Extruder entfernt und verlässt den Extruder in flüssiger Phase. Dem gleichen Extruder werden das Polymerisat B) und, sofern enthalten, die Komponenten C), D), E) und/oder F), zugeführt, sodaß als Produkt des Verfahrens die fertige Formmasse extrudiert wird. Dieses Verfahren (Abquetschverfahren) sei nachfolgend näher beschrieben:
Dazu wird das Pfropfpolymerisat zuvor vom Dispersionswasser z.B. durch Sieben, Auspressen, Filtrieren, Dekantieren, Sedimentieren, Zentrifugieren, oder durch eine teilweise thermische Trocknung, abgetrennt. Das auf diese Weise teilentwässerte, bis zu 60 Gew.-% Restwasser enthaltende Pfropfpolymerisat wird in den Extruder eindosiert.
Das eindosierte Material wird von der Schnecke gegen ein als Hindernis wirkendes Stauelement gefördert, welches sich in der Regel am Ende eines "Abquetschabschnitts" befindet. Durch diese Stauzone wird ein Druck aufgebaut, der das Wasser aus dem Propfpolymerisat auspreßt ("abquetscht"). Man kann den Druck je nach dem rheologischen Verhalten des Kautschuks durch unterschiedliche Anordnung von Schnecken-, Knetelementen oder anderen Stauelementen aufbauen. Grundsätzlich sind alle handelsüblichen, dem Druckaufbau dienenden Vorrichtungselemente geeignet.
Beispielsweise seien als mögliche Stauelemente

- überschobene, fördernde Schneckenelemente
- Schneckenelemente mit Steigung entgegen der Förderrichtung, wozu auch Schneckenelemente mit Fördergewinden großer Steigung (Steigung größer ein Schneckendurchmesser) entgegen der Förderrichtung (sog. LGS-Elemente)
- Knetblöcke mit nichtfordernden Knetscheiben in unterschiedlicher Breite
- Knetblöcke mit rückfördernder Steigung
- Knetblöcke mit fördernder Steigung
- Zylinderscheiben, Exzenterscheiben und daraus konfigurierte Blöcke
- neutrale Stauscheiben ("Drosselscheiben")
- mechanisch verstellbare Drosseln (Schiebegehäuse, Radialdrosseln, Zentraldrosseln)

genannt.
Es können auch zwei oder mehrere der Stauelemente miteinander kombiniert werden. Gleichfalls kann die Stauwirkung der Stauzone durch die Länge und die Intensität der einzelnen Stauelemente dem jeweiligen Pfropfkautschuk angepaßt werden.

Im beschriebenen "Abquetschabschnitt" sind die Schneckenelemente, die sich vor der Stauzone (vor dem ersten Stauelement) befinden, in der Regel als übliche Förderschnecken ausgebildet. In einer bevorzugten Ausführungsform werden Förderschnecken verwendet, deren Steigung in Richtung auf die Stauzone zunimmt, also steiler wird. Diese Ausgestaltung bewirkt einen vergleichsweise langsamen Druckaufbau - man spricht von einer Kompressionszone -, wie er zur Entwässerung bestimmter Kautschuke vorteilhaft sein kann.

In einer anderen bevorzugten Ausführungsform erfolgt der Druckaufbau ohne vorherige Kompressionszone (d.h. die Forderschnecke im Abquetschabschnitt hat eine konstante Steigung), also unmittelbar vor bzw. in der Stauzone.

Im Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Bevorzugt enthält der Abquetschabschnitt des Extruders zum Druckaufbau Schneckenelemente mit einer Steigung entgegen der Förderrichtung und/oder entsprechende Knetblöcke.

Das im Abquetschabschnitt aus dem Pfropfpolymerisat ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren, im Regelfall unter Normaldruck stehenden Entwässerungsöffnungen versehen. "unter Normaldruck stehend" bedeutet, daß das Wasser unter Atmosphärendruck aus der Entwässerungsöffnung austritt. Die Entwässerungsöffnungen befinden sich bevorzugt an der Oberseite des Extruders, jedoch sind auch seitliche oder nach unten weisende Anordnungen möglich. Weiterhin sind die Entwässerungsöffnungen bevorzugt mit einer Vorrichtung versehen, die das Austreten des geförderten Pforpfpolymerisates A) verhindern. Besonders bevorzugt werden dazu sog. Rückhalteschnecken verwendet.

Die Entwässerungsöffnungen sind in an sich bekannter Weise ausgestaltet. Bevorzugt werden Entwässerungsöffnungen verwendet, deren Dimensionierung so gewählt ist, daß die Öffnungen durch den Extruderinhalt nicht verstopft werden können. Besonders bevorzugt werden als Entwässerungsöffnungen Aussparungen oder Bohrungen im Extruderzylinder (Gehäuse) verwendet.

In einer besonders bevorzugten Ausführungsform werden als Entwässerungsöffnungen keine Seihergehäuse oder ähnliche, schnell verstopfende Bauteile wie etwa Siebe, verwendet. Seihergebäuse sind nämlich, wie bereits beschrieben, anfällig für Verstopfungen.

Die zu den Stauelementen zugehörige Entwässerungsöffnung befindet sich üblicherweise in einem Abstand von mindestens einem Schnekkendurchmesser $D_{Schnecke}$, bevorzugt in einem Bereich von 1 bis 4 $D_{Schnecke}$, und ganz besonders bevorzugt 1 bis 2 $D_{Schnecke}$, vor dem Stauelement, bzw. im Falle mehrerer Stauelemente, vor dem ersten Stauelement (stromaufwärts). Unter "Abstand" soll dabei die Strecke zwischen der Mitte der Entwässerungsöffnung und dem Beginn des ersten Stauelementes verstanden werden.

Die Temperatur des austretenden Wassers beträgt im allgemeinen 20 bis 95°C und bevorzugt 25 bis 70°C, gemessen an der Austrittsöffnung. Im ersten Abquetschabschnitt werden, abhängig von der Elastomerkomponente und dem anfangs vorhandenen Restwassergehalt, üblicherweise 10 bis 90, bevorzugt 20 bis 80 Gew.-% des anfänglich enthaltenen Restwassers entfernt.

In einer bevorzugten Ausführungsform wird der Extruder in den Dosierabschnitten und in den Abquetschabschnitten nicht beheizt. In einer Ausführungsform wird der Extruder in diesen genannten Abschnitten gekühlt.

Die partiell entwässerte Pfropfpolymerisat A) wird über die Stauzonen hinweggefördert und gelangt in den nächsten Extruderabschnitt.

In einer für die Herstellung mancher schlagzäher Thermoplasten bevorzugten Ausführungsform folgt auf den soeben beschriebenen ersten Abquetschabschnitt ein zweiter Abquetschabschnitt, der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt, insbesondere auch zum Abstand der Entwässerungsöffnung von der nachfolgenden Stauzone.

Das ausgepresste Wasser verlässt den Extruder in der Regel durch alle angebrachten Entwässerungsöffnungen. Je nach den Eigenschaften der Elastomerkomponente und ihrem Restwassergehalt ist es jedoch auch möglich, daß das abgequetschte Wasser nur aus einer oder einigen der verfügbaren Entwässerungsöffnungen austritt, und die anderen Entwässerungsöffnungen "trocken" sind, also kein oder nahezu kein Wasser ausleiten. Dies hat sich in keiner Weise als nachteilig erwiesen.

Derjenige Anteil des Restwassers, der nicht mechanisch durch Auspressen ("Abquetschen") entfernt wird, kann auf übliche Weise über Entgasungseinrichtungen des Extruders als Dampf entfernt werden.

Bevorzugt werden mindestens 30 Gew.-% des Restwassers (welches z.B. am Pfropfpolymerisat A) äußerlich anhaften und/oder darin eingeschlossen sein kann) im Extruder als flüssiges Wasser ausgepresst. In der Regel werden

30 bis 90 Gew.-% des Restwassers in flüssiger Form durch Abquetschen und 10 bis 70 Gew.-% über Entgasungseinrichtungen als Dampf entfernt.

Im beschriebenen Abquetschverfahren wird das Polymerisat B) und, sofern enthalten, die Polymerisate C), D) und/oder E), in Form einer Polymerschmelze zugeführt. Die Zufuhr der Polymerschmelze kann mittels eines Extruders oder technisch einfacherer Fördereinrichtungen wie Schmelzepumpen oder Dosierschnecken erfolgen.

Die Polymerschmelze von B) wird dem Extruder nach den Abquetschabschnitten zugeführt. Die Mischung aus ausgepresstem, noch nicht aufgeschmolzenem Pfropfpolymerisat A) und Polymerschmelze B) wird in nachfolgenden Abschnitten, die Durchmischungs-, Knet- und/oder andere Plastifizierungselemente enthalten, aufgeschmolzen und homogenisiert.

Näheres zum Abquetschverfahren ist beispielsweise der WO-A 98/13412 zu entnehmen.

Wird ein Extruder als Mischvorrichtung für die Komponenten A) und B), und sofern enthalten - C), D), E) und F) verwendet, so können wie allgemein bekannt ist, die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sein können.

Die im Einzelfall zu wählenden Temperaturen und Längen der einzelnen Abschnitte unterscheiden sich in Abhängigkeit der chemischen und physikalischen Eigenschaften der Komponenten A) und B), und - sofern enthalten - C), D), E) und F) und deren Mengenverhältnissen. Gleiches gilt auch für die Schneckendrehzahl, die innerhalb eines weiten Bereiches variieren kann. Nur beispielhaft sei eine Drehzahl der Extruderschnecken im Bereich von 100 bis 350 $min^{-1}$ genannt.

Die in der Mischvorrichtung aus den Komponenten A) und B), und - sofern enthalten - C), D), E) und F), hergestellte im wesentlichen schmelzflüssige Polymermischung wird erfindungsgemäß einem schnellen Abkühlen unterworfen.

Das schnelle Abkühlen erfolgt üblicherweise durch Inkontaktbringen der im wesentlichen schmelflüssigen Polymermischung (nachfolgend kurz als "Polymerschmelze" bezeichnet) mit einem kalten Medium oder mit einer kalten Oberfläche.

Dabei bedeutet "kalt" eine Temperatur, die soweit unter der Temperatur der Polymerschmelze liegt, daß die Polymerschmelze beim Inkontaktbringen schnell abkühlt. "Kalt" bedeutet demnach nicht in jedem Fall gekühlt. Beispielsweise kann eine 200°C heiße Polymerschmelze durch Wasser einem schnellem Abkühlen unterworfen werden, welches zuvor auf z.B. 30 bis 90°C erwärmt wurde. Entscheidend ist, das die Differenz zwischen der Polymerschmelzetemperatur und der Temperatur des kalten Mediums bzw. der kalten Oberfläche, zum schnellen Abkühlen der Schmelze ausreicht.

"Schnell" bedeutet, daß die Polymerschmelze in einem Zeitraum von bis zu 10 sec, bevorzugt bis zu 5 sec und besonders bevorzugt bis zu 3 sec vom schmelzflüssigen in den festen Zustand überführt und abgekühlt wird.

Bevorzugt wird die Polymerschmelze mit einem kalten Medium schnell abgekühlt. Solche Medien können Gase oder Flüssigkeiten sein.

Beispielhaft seien für gasförmige kalte Medien (nachfolgend als "Kühlgas" bezeichnet) gekühlte oder ungekühlte Luft oder, insbesondere bei oxidationsempfindlichen Polymerschmelzen, Gase wie Kohlendioxid, Stickstoff oder Edelgase genannt. Bevorzugt wird als Kühlgas Luft oder Stickstoff verwendet. Das Kühlgas wird in der Regel auf die aus der Mischvorrichtung austretende Polymerschmelze geblasen.

Als flüssige kalte Medien (nachfolgend als "Kühlflüssigkeit" bezeichnet) können organische und anorganische Kühlflüssigkeiten, eingesetzt werden. Geeignete organische Kühlflüssigkeiten sind beispielsweise Öle und andere hochsiedende organische flüssige Stoffe die mit der abzukühlenden Polymerschmelze weder chemische noch physikalische Wechselwirkungen (z.B. Quellen, Anlösen, etc.) eingehen, also gegenüber der Polymerschmelze chemisch und physikalisch inert sind.

Bevorzugt werden anorganische Kühlflüssigkeiten verwendet, insbesondere wäßrige Lösungen und Wasser. Besonders bevorzugt ist Wasser, das gekühlt (Gefrierpunkt bis Raumtemperatur), ungekühlt oder temperiert (Raumtemperatur bis Siedepunkt) eingesetzt werden kann.

Die Kühlflüssigkeit wird in der Regel auf die austretende Polymerschmelze gesprüht; oder die Polymerschmelze tritt aus der Mischvorrichtung direkt in ein Bad aus der Kühlflüssigkeit aus. Man kann die Kühlflüssigkeit auch als breiten Flüssigkeitsstrahl (Schwall) auf die austretende Polymerschmelze aufbringen.

Ein Besprühen der Polymerschmelze mit Kühlflüssigkeit ist insbesondere bei der Verwendung von Mischvorrichtungen vorteilhaft, die Folien erzeugen (etwa Walzenstühlen, Mischwalzwerken und Kalandern). Die als Film austretende Polymerschmelze verfestigt sich durch das Besprühen mit Kühlflüssigkeit zu einer Folie.

Besonders bevorzugt tritt die Polymerschmelze aus der Mischvorrichtung direkt in ein Bad aus der Kühlflüssigkeit aus, ganz besonders bevorzugt in ein Bad aus Wasser.

Es ist auch möglich und in manchen Fällen bevorzugt, die aus der Mischvorrichtung austretende Polymerschmelze zunächst durch Inkontaktbringen mit einem Kühlglas, z.B. Aufblasen von temperierter Luft oder einem Schutzgas wie Stickstoffgas, nur geringfügig abzukühlen. Dadurch verfestigt sich lediglich die äußere Oberfläche der

Schmelze, wohingegen das Innere des Polymeren noch schmelzflüssig bleibt. Das eigentliche schnelle Abkühlen erfolgt dann durch Inkontaktbringen der zuvor an der Oberfläche verfestigten Schmelze mit einer Kühlflüssigkeit, z.B. Wasser, wobei auch das Innere der Schmelze aushärtet.

Beispielsweise können die aus dem Düsenkopf des Extruders austretenden Stränge der Polymerschmelze durch Aufblasen von Luft zunächst oberflächlich verfestigt werden und die Stränge dann in ein Wasserbad überführt werden, wo die eigentliche, schnelle Abkühlung erfolgt.

Die durch das schnelle Abkühlen erstarrte Polymerschmelze kann in dem Fachmann bekannter Weise weiter verarbeitet werden. In der Regel wird das fest gewordene Polymere durch Mahlen, Schneiden, Granulieren oder andere Verfahren zerkleinert.

In einer besonders bevorzugten Ausführungsform wird das schnelle Abkühlen und die Zerkleinerung nach dem Verfahren der Unterwassergranulierung vorgenommen. Bei der Unterwassergranulierung tritt die Polymerschmelze aus der Mischvorrichtung durch eine Düsenplatte aus, deren Bohrungen (Düsen) bevorzugt rund sind und die bevorzugt kreisförmig angeordnet sind. Die Düsenplatte befindet sich unter Wasser (oder einer anderen Kühlflüssigkeit) oder die Düsenplatte wird mit Wasser (oder einer anderen Kühlflüssigkeit) besprüht, was unter Schutzgas geschehen kann. Unmittelbar hinter der Düsenplatte an deren Außenseite befinden sich Schneidvorrichtungen, bevorzugt rotierende Messer, die das austretende Polymer abtrennen. Das Polymer wird demnach von rotierenden Messern abgetrennt und in Wasser (oder einer anderen Kühlflüssigkeit) schnell abgekühlt, wobei es zu in der Regel mehr oder weniger runden, perlförmigen Körnern erstarrt.

Bei der Düsenplatte sind jedoch auch andere als kreisförmige Anordnungen der Bohrungen und andere als runde Lochformen gebräuchlich.

In einer anderen Ausführungsform wird eine sog. Unterwasser-Strangranulierung eingesetzt. Dabei tritt die Schmelze als Strang aus einer Düsenplatte aus, und wird sofort durch einen Wasser- oder Kühlmittelschwall benetzt und dadurch schnell abgekühlt, wonach die Stränge über eine schiefe Ebene in ein Wasserbad oder Kühlmittelbad eingeführt und nach dem Abkühlen granuliert werden.

In einer ganz besonders bevorzugten Ausführungsform wird ein Extruder als Mischvorrichtung für die Komponenten A) und B), und - sofern enthalten - C), D), E) und F), mit der soeben beschriebenen Unterwassergranulierung verwendet. Die Austragsöffnung des Extruders ist in dieser Ausführungsform folglich eine unter Wasser befindliche (oder mit Wasser besprühte) Düsenplatte mit Schneidvorrichtungen, insbesondere rotierenden Messern.

Bevorzugt sind demnach thermoplastische Formmassen, enthaltend die zuvor beschriebenen Komponenten A) und B), und - sofern enthalten - C), D), E) und F), und Butadien als konjugiertes Dien a11), erhältlich durch

1) Herstellen der Pfropfpolymerisate A) nach dem Verfahren der Emulsionspolymerisation, wobei ein wasserfeuchtes Polymerisat A) erhalten wird, das bis zu 60 Gew.-%, bezogen auf A), Restwasser enthält,

2) Vermischen des wasserfeuchten Pfropfpolymerisates A) mit den weiteren Komponenten B) bis F) in einem Extruder, wobei eine im wesentlichen schmelzflüssige Polymermischung entsteht, und wobei mindestens 30 Gew.-% des Restwassers der wasserfeuchten Pfropfpolymerisates A) durch Druckaufbau im Extruder als flüssiges Wasser ausgepresst werden,

3) Schnelles Abkühlen der im wesentlichen schmelzflüssigen Polymermischung durch das Verfahren der Unterwassergranulierung.

Die erfindungsgemäßen thermoplastischen Formmassen können nach den bekannten Verfahren der Thermoplastverarbeitung verarbeitet werden, also z.B. durch Extrudieren, Spritzgießen, Kalandrieren, Hohlkörperblasen, Pressen oder Sintern.

Die erfindungsgemäßen Formmassen haben gute mechanische Eigenschaften, insbesondere eine gute Zähigkeit, auch eine gute Kältezähigkeit, und ein ausgewogenes Verhältnis von Zähigkeit und Steifigkeit. Sie zeigen einen verbesserten Zäh-Spröd-Übergang. Die Formmassen weisen eine geringe Eigenfarbe auf (Gelbwert YI $\leq 25$), sowie eine nur geringe Vergilbungsneigung und vergilben auch nach längere Wärmelagerung oder durch eine Verarbeitung in der Wärme nur wenig. Die Formmassen zeichnen sich weiterhin durch eine hohe Farbtiefe bei der Einfärbung aus (geringe Lichtstreuung mit Streuwerten < 4,9).

Beispiele

1. Herstellung des Pfropfpolymerisates A)

1.1.Herstellung der Pfropfgrundlage a1)

43120 g der in Tabelle 1 angegebenen Monomerenmischung werden in Gegenwart von tert.-Dodecylmercaptan (TDM), 311 g Raliumsalz von $C_{12}$-$C_{20}$-Fettsäuren, 82 g Kaliumpersulfat, 147 g Natriumgydrogencarbonat und 58400 g Wasser bei 65°C zu einem Polybutadienlatex polymerisiert. Die Menge des TDM in Gew.-%, bezogen auf die Monomerenmischung, sowie die Fahrweise der Zugabe von Monomeren und TDM ist in Tabelle 1 bzw. nachfolgend unter "Fahrweise" angegeben. Ansonsten wurde verfahren wie in der EP-A 62901, Bsp. 1, S. 9, Z. 20 - S. 10, Z. 6 beschrieben. Der Umsatz betrug 95 % oder darüber. Die mittlere Teilchengröße $d_{50}$ des Latex betrug 80 bis 120 nm, der Quellungsindex betrug mehr als 18. Die mittels NMR bestimmte $T_2$-Zeit betrug von 2,5 bis 3,8 ms. Der Feststoffgehalt betrug 41 Gew.-%.

Fahrweise:

Variante 0: Die Vorlage enthielt 1 Gew.-% TDM, die Gesamtmenge des Styrols bzw. des n-Butylacrylats (sofern diese Comonomeren verwendet wurden) und soviel Butadien, daß die Vorlage 16,6 Gew.-% der gesamten Monomermenge ausmachte. 1 Stunde nach Polymerisationsbeginn wurde das restliche Butadien innerhalb 5 Stunden zudosiert. Die Dosierung des TDM erfolgte in einer Portion bei Polymerisationsbeginn.

Variante 1: Die Gesamtmenge des Styrols und 20 Gew.-% des Butadiens und 20 Gew.-% des TDM wurden vorgelegt. Die restlichen 80 Gew.-% des Butadiens wurden innerhalb 5 Stunden zudosiert, wobei pro Stunde 20 Gew.-% des restlichen TDM zugefügt wurden.

Variante 2: Wie Variante 0, wobei das TDM in 3 gleichgroßen Portionen zu Beginn, in der Mitte und am Ende der Restbutadienzulauf-Phase zudosiert wurde.

variante 3: Wie Variante 0, jedoch mit 1,2 Gew.-% TDM.

Variante 4: Wie Variante 0, wobei zusätzlich 0,5 Gew.-% TDM 10 min nach Start des Restbutadienzulaufs zudosiert wurden.

Variante 5: Wie Variante 4, jedoch enthielt die Vorlage nur soviel Butadien, daß die Vorlage 12,5 Gew.-% der gesamten Monomermenge ausmachte.

Variante 6: Wie Variante 3, jedoch enthielt die Vorlage nur soviel Butadien, daß die Vorlage 12,5 Gew.-% der gesamten Monomermenge ausmachte.

Variante 7: Wie Variante 3, wobei die Vorlage zusätzlich 0,2 Gew.-% Butandioldiacrylat enthielt.

Variante 8: Ein Saatlatex enthaltend Polystyrol-Partikel einer $d_{50}$-Teilchengröße von 29 nm, Wasser, Puffersalze und Kaliumpersulfat (Feststoffgehalt 33 %) wurde in solcher Menge vorgelegt, daß ein Polystyrolgehalt von 1,9 Gew.-%, bezogen auf die Monomeren der Pfropfgrundlage a1), resultierte. Innerhalb 80 min wurde eine Monomermischung zugetropft, die 0,33 Gew.-% TDM sowie die Gesamtmenge des monomeren Styrols und soviel Butadien enthielt, daß sie 16,6 Gew.-% der gesamten Monomermenge ausmachte. Das restliche Butadien wurde anschließend innerhalb 6,5 Stunden zudosiert, wobei jeweils 0,33 Gew.-% TDM nach 2,5 Stunden und nach 6,5 Stunden zugefügt wurden.

Zur Agglomeration des Latex wurden 35000 g des erhaltenen Latex bei 65°C durch Zugabe von 2870 g einer Dispersion (Feststoffgehalt 10 Gew.-%) aus 96 Gew.-% Ethylacrylat und 4 Gew.-% Methacrylsäureamid agglomeriert (partielle Agglomeration).

Tabelle 1: Pfropfgrundlage

| Beispiel | K1 | K2 | K3 | K4 | K5a | K5b | K6 | K7 |
|---|---|---|---|---|---|---|---|---|
| Monomere [Gew.-%] | | | | | | | | |
| • Butadien | 100 | 97 | 95 | 97 | 95 | 95 | 93 | 90 |
| • Styrol | 0 | 0 | 0 | 3 | 5 | 5 | 7 | 10 |
| • n-Butylacrylat | 0 | 3 | 5 | 0 | 0 | 0 | 0 | 0 |
| Regler TDM [Gew.-%] 2) | 1 | 1 | 1 | 1 | 1 | 1 | 1 | 1 |
| Fahrweise: Variante Nr. | 0 | 0 | 0 | 0 | 1 | 0 | 0 | 0 |
| Eigenschaften | | | | | | | | |
| • Quellungsindex | 32 | 14 | 23 | 12 | 43 | 18 | 21 | 25 |
| • Gelgehalt [%] | 70 | 90 | 76 | 92 | 62 | 81 | 78 | 73 |
| • Lichtstreuung | 82 | 82 | 78 | 78 | 78 | 88 | 85 | 74 |

Fortsetzung Tabelle 1:

| Beispiel | K8 | K9 | K10 | K11 | K12 | K13 | K14 | K1a |
|---|---|---|---|---|---|---|---|---|
| Monomere [Gew.-%] | | | | | | | | |
| ● Butadien | 93 | 93 | 93 | 93 | 93 | 93,1 | 100 | 100 |
| ● Styrol | 7 | 7 | 7 | 7 | 7 | 1,9 +5[1)] | 0 | 0 |
| ● n-Butylacrylat | 0 | 0 | 0 | 0 | 0 | 0 | 0 | 0 |
| Regler TDM [Gew.-%][2)] | 1,2 | 1 + 0,5 | 1 + 0,5 | 1,2 | 1,2 | 1 | 1 | 1 |
| Fahrweise: Variante Nr. | 3 | 4 | 5 | 6 | 7 | 8 | 1 | 2 |
| Eigenschaften | | | | | | | | |
| ● Quellungsindex | 22 | 31 | 26 | 41 | 32 | 38 | 29 | 3) |
| ● Gelgehalt [%] | 79 | 66 | 74 | 66 | 74 | - | 72 | - |
| ● Lichtstreuung | 85 | 85 | 86 | 86 | 87 | - | 77 | - |

\- nicht bestimmt

1) 1,9 Gew.-% als Polystyrol-Saat (in Form eines Saatlatex), 5 Gew.-% als Monomere

2) Gew.-% TDM bezogen auf die Monomeren

3) Es wurden unterschiedliche Chargen hergestellt und weiterverarbeitet. Siehe Tabelle 5.

1.2.Herstellung der Pfropfauflage a2)

Dem agglomerierten Latex wurden 9300 g Wasser, 130 g Kaliumsalz von $C_{12}$-$C_{20}$-Fettsäuren und 17 g Kaliumperoxodisulfat zugefügt. Anschließend wurde nach einer der folgenden Varianten verfahren:

Pfropfvariante 1: 8970 g der in Tabelle 2 angegebenen Pfropfmonomermischung wurde bei 75°C innerhalb 4 Stunden unter Rühren zugefügt.

Pfropfvariante 2: Die Gesamtmenge der in Tabelle 2 angegebenen Pfropfmonomermischung betrug 8970 g. Zunächst wurde bei 75°C unter Rühren soviel Styrol zugefügt, daß die Styrolmenge 30 Gew.-% der Gesamtmenge der Pfropfmonomeren ausmachte. Nach 30 min Wartezeit wurde eine Monomermischung aus der Restmenge Styrol und der Gesamtmenge Acrylnitril bzw. Methylmethacrylat innerhalb 2 Stunden zugefügt.

Pfropfvariante 3: Wie Pfropfvariante 1, wobei der Monomermischung 0,5 Gew.-% TDM zugefügt wurden.

Der Umsatz, bezogen auf die Pfropfmonomeren, war nach weiteren 2 Stunden jeweils nahezu quantitativ.
Die erhaltene Pfropfpolymerisat-Dispersion mit bimodaler Teilchengrößenverteilung wies eine mittlere Teilchengröße $d_{50}$ von 150 bis 350 nm und einen $d_{90}$-Wert von 400 bis 600 nm auf. Ein erstes Maximum der Teilchengrößenverteilung lag im Bereich 50 bis unter 150 nm, ein zweites Maximum im Bereich 200 bis 600 nm. Die Dichte der kleineren Pfropfpolymerisat-Teilchen (erstes Maximum 50 bis unter 150 nm) lag bei 0,90 bis 0,93 $g/cm_3$, die Dichte der großen Teilchen (zweites Maximum 200 bis 600 nm) bei 0,96 bis 0,98 $g/cm^3$.
Die erhaltene Dispersion wurde mit einer wässrigen Dispersion eines Antioxidans versetzt und anschließend durch Zugabe einer Magnesiumsulfatlösung koaguliert. Der koagulierte Kautschuk wurde vom Dispersionswasser abzentrifugiert und mit Wasser gewaschen. Man erhielt eine Kautschuk mit ca. 30 Gew.-% anhaftendem bzw. eingeschlossenem Restwasser.

Tabelle 2: Pfropfauflage und fertiges Pfropfpolymerisat A)

| Komponente: | A1 | A2 | A3 | A4 | A5 | A6 | A7 | A8 | A9 | A10 |
|---|---|---|---|---|---|---|---|---|---|---|
| Pfropfgrundlage aus Beispiel | K1 | K1 | K1 | K1 | K1 | K4 | K5a | K1a | K5b | K6 |
| Monomere [Gew.-%] | | | | | | | | | | |
| ● Styrol | 83 | 80 | 78 | 75 | 70 | 80 | 80 | 80 | 80 | 80 |
| ● Acrylnitril | 17 | 20 | 22 | 25 | 30 | 20 | 20 | 20 | 20 | 20 |
| ● Methylmethacrylat | 0 | 0 | 0 | 0 | 0 | 0 | 0 | 0 | 0 | 0 |
| Pfropfvariante Nr. | 1 | 1 | 1 | 1 | 1 | 1 | 1 | 1 | 1 | 1 |
| Eigenschaften des Pfropfpol. | | | | | | | | | | |
| ● Gelbwert YI | 9,0 | 9,3 | - | - | 19,9 | 13,6 | 15,7 | - | - | - |
| ● Quellungsindex | - | - | - | - | - | - | - | 1) | 8 | 8 |
| ● Gelgehalt [%] | - | - | - | - | - | - | - | 1) | 89 | 89 |

Fortsetzung Tabelle 2:

| Komponente: | A11 | A12 | A13 | A14 | A15 | A16 | A17 | A18 | A19 | A20 |
|---|---|---|---|---|---|---|---|---|---|---|
| Pfropfgrundlage aus Beispiel | K8 | K9 | K10 | K11 | K12 | K13 | K3 | K14 | K14 | K14 |
| Monomere [Gew.-%] | | | | | | | | | | |
| ● Styrol | 86 | 80 | 80 | 80 | 80 | 80 | 86 | 80 | 84,6 | 72 |
| ● Acrylnitril | 14 | 20 | 20 | 20 | 20 | 20 | 14 | 20 | 15,4 | 0 |
| ● Methylmethacrylat | 0 | 0 | 0 | 0 | 0 | 0 | 0 | 0 | 0 | 28 |
| Pfropfvariante Nr. | 2 | 1 | 1 | 1 | 1 | 3 | 2 | 1 | 2 | 2 |
| Eigenschaften des Pfropfpol. | | | | | | | | | | |
| ● Gelbwert YI | - | - | - | - | - | - | - | - | - | - |
| ● Quellungsindex | 10 | 11 | 8 | 10 | 10 | 14 | 14 | 11 | 12 | 16 |
| ● Gelgehalt [%] | 87 | 83 | 88 | 84 | 85 | 74 | 89 | 86 | 84 | 81 |

- nicht bestimmt

1) Es wurden unterschiedliche Chargen der Pfropfgrundlage K1a eingesetzt. Siehe Tabelle 5.

2. Herstellung der Polymerisate B), C), D) und E)

Die thermoplastischen Polymerisate B) bis E) wurden nach dem Verfahren der kontinuierlichen Lösungspolymerisation hergestellt, wie es im Kunststoff-Handbuch, Hrg. R. Vieweg und G. Daumiller, Band V "Polystyrol", Carl-Hanser-Verlag München 1969, S 122 - 124, beschrieben ist. Tabelle 3 fasst die Zusammensetzungen und Eigenschaften zusammen.

Tabelle 3:

| Komponenten B) bis D) | | | | | | |
|---|---|---|---|---|---|---|
| Komponente | B1 | B2 | B3 | C1 | C2 | D1 |
| Monomeren [Gew.-%] | | | | | | |
| Styrol | 75 | 75 | 0 | 75 | 75 | 67 |
| $\alpha$-Methylstyrol | 0 | 0 | 70 | 0 | 0 | 0 |
| Acrylnitril | 25 | 25 | 30 | 25 | 25 | 33 |
| Viskositätszahl VZ [ml/g] | 67 | 80 | 80 | 80 | 100 | 60 |

Komponente E1 ist ein Copolymeres aus 63 Gew.-% Styrol, 13 Gew.-% Acrylnitril und 25 Gew. -% N-Phenylmaleinimid mit einer Wärmeformbeständigkeit Vicat B von 144°C.

Komponente E2 ist ein Copolymeres aus 59 Gew.-% Styrol und 41 Gew.-% N-Phenylmaleinimid.

3. Herstellung der Komponente F)

Komponente F1

60 Gew.-% eines Pigments aus Titandioxid und 40 Gew.-% der Komponente B2 wurden auf einem Kneter bei 240°C innig vermischt, ausgetragen und nach Abkühlen granuliert.

4. Herstellung der Abmischungen

4.1.Abmischung nach vorheriger Trocknung des Pfropfkautschuks A), Beispiele 1 und 2

Der Restwasser enthaltende Pfropfkautschuk A) wurde mit Warmluft im Vakuum getrocknet und mit den weiteren Komponenten B) bis F) in einem Extruder, Typ ZSK 30, Fa. Werner und Pfleiderer, bei 250°C und 250 $min^{-1}$ bei einem Durchsatz von 10 kg/h innig vermischt. Die Formmasse wurde extrudiert und die schmelzflüssige Polymermischung wurde einer schnellen Abkühlung unterworfen, in dem sie in ein Wasserbad von 30°C eingeleitet wurde. Die erstarrte Formmasse wurde granuliert.

4.2. Abmischung ohne vorherige Trocknung des Pfropfkautschuks A), Beispiele 3 bis 35V

Der Restwasser enthaltende Pfropfkautschuk A) wurde in einen Extruder Typ ZSK von Fa. Werner und Pfleiderer eindosiert, dessen zwei Förderschnecken im vorderen Teil mit druckaufbau1 enden Stauelementen versehen waren. Ein erheblicher Teil des Restwassers wurde auf diese Weise mechanisch ausgepresst und verließ den Extruder in flüssiger Form durch Entwässerungsöffnungen. Die weiteren Komponenten B) bis F) wurden dem Extruder in Form ihrer Schmelzen stromabwärts hinter den Stauzonen zugeführt und mit der entwässerten Komponente A) innig vermischt. Das verbliebene Restwasser wurde über Entgasungsöffnungen im hinteren Teil des Extruders als Dampf entfernt. Der Extruder wurde bei einer Umdrehungszahl von 250 $min^{-1}$ und einem Durchsatz von 80 kg/h oder 250 kg/h betrieben, wobei der Durchmesser der verwendeten Extruderschnecken entsprechend gewählt wurde.

Die Formmasse wurde extrudiert und die schmelzflüssige Polymermischung wurde einer schnellen Abkühlung unterworfen. Das schnelle Abkühlen erfolgte in den Beispielen 7 bis 28 durch Unterwassergranulierung mit einem Unterwassergranulator der Firma GALA: die Düsenplatte des Extruders befand sich unter Wasser bei einer Wassertemperatur von 60°C. Das in das Wasserbad als Schmelzestränge austretende Polymere wurde von rotierenden Messern, die sich unmittelbar an der Außenseite der Düsenplatte befanden, abgetrennt. Man erhielt perlförmige Polymerkörner.

In den Beispielen 3 bis 6 und 29 bis 35V erfolgte das schnelle Abkühlen wie folgt: die Düsenplatte des Extruders befand sich in unmittelbarer Nähe eines Wasserbades von 30°C. Die aus der Düsenplatte austretenden Schmelzestränge wurden kurz durch Luft geführt und direkt danach in das Wasserbad geleitet, wodurch sie schnell abkühlten. Die abgekühlten Stränge wurden auf einem üblichen Granulator granuliert.

Die verwendeten Komponenten und ihre Mengenanteile sind in Tabelle 4 bis 7 angegeben.

5. Durchgeführte Messungen

Quellungsindex der Pfropfgrundlage: aus der wässrigen Dispersion der Pfropfgrundlage wurde durch Verdampfen des Wassers ein Film hergistellt. 0,2 g dieses Films wurden mit 50 g Toluol versetzt. Nach 24 Stunden wurde das Toluol von der aufgequollenen Probe abgesaugt und die Probe ausgewogen. Nach 16 Stunden Trocknen der Probe im Vakuum bei 110°C wurde erneut ausgewogen. Es wurden berechnet:

$$\text{Quellungsindex QI} = \frac{\text{Masse der aufgequollenen, abgesaugten Probe}}{\text{Masse der im Vakuum getrockneten Probe}}$$

$$\text{Gelgehalt} = \frac{\text{Masse der im Vakuum getrockneten Probe}}{\text{Einwaage der Probe vor der Quellung}} \cdot 100\ \%$$

Teilchengrößen des Kautschuklatex:

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der $d_{10}$-Wert gibt denjenigen Teilchendurchmesser an, bei dem 10 Gew.-% aller Teilchen einen kleineren und 90 Gew.-% einen größeren Durchmesser haben. Umgekehrt gilt für den $d_{90}$-Wert, daß 90 Gew.-% aller Teilchen einen kleineren und 10 Gew.-% einen größeren Durchmesser haben als derjenige Durchmesser, der dem $d_{90}$-Wert entspricht. Der gewichtsmittlere Teilchendurchmesser $d_{50}$ bzw. volumenmittlere Teilchendurchmesser $D_{50}$ gibt denjenigen Teilchendurchmesser an, bei dem 50 Gew.-% bzw. Vol.-% aller Teilchen einen größeren und 50 Gew.-% bzw. Vol.-% einen kleineren Teilchendurchmesser aufweisen. $d_{10}$-, $d_{50}$- und $d_{90}$-Wert charakterisieren die Breite Q der Teilchengrößenverteilung, wobei $Q = (d_{90}-d_{10})/d_{50}$. Je kleiner Q ist, desto enger ist die Verteilung.

$T_2$-Zeit: die $T_2$-Zeit wurde durch Messen der NMR-Relaxation einer entwässerten und verfilmten Probe gemessen. Dazu wurde die Probe, nach Ablüften über Nacht, bei 60°C 3 Stunden im Vakuum getrocknet und mit einem minispec-Gerät der Fa. Brucker bei 80°C vermessen.

Gelbwert YI: die Bestimmung des Yellowness-Index YI erfolgte durch Bestimmung der Farbkoordinaten X, Y, Z nach DIN 5033 bei Normlicht D 65 und 10°-Normalbeobachter nach folgender Definitions-Gleichung:

$$YI = (131.48\ X - 116.46\ Z)/Y$$

Viskositätszahl VZ: sie wurde ermittelt nach DIN 53726 an einer 0,5 Gew. -%igen Lösung des Polymerisates in Dimethylformamid.

Schmelzindex MVR: er wurde bestimmt nach DIN 53735/30 bei 220°C Schmelztemperatur und 10 kg bzw. 21,6 kg Belastung.

Für die Bestimmung der folgenden mechanischen und Glanz-Werte wurden aus dem Granulat durch Spritzguß Probekörper hergestellt, und zwar Norm-Kleinstäbe (siehe DIN 53453), Schulterstäbe, Rundscheiben von 60 mm Durchmesser und 2 mm Dicke bzw. Rechteckscheiben von 2 mm Dicke. Die Schmelzetemperatur betrug jeweils 250°C und die Formtemperatur jeweils 60°C, sofern nicht anders angegeben.

Glanz: er wurde nach ISO 2813 an Rechteckscheiben 40 x 60 mm bei 45° Einstrahlwinkel mit dem Meßgerät micro-gloss von Fa. Byk bestimmt.

$a_K$: die Charpy-Kerbschlagzähigkeit $a_K$ wurde an Norm-Kleinstäben durch Schlagbiegeversuch nach ISO 179-2/1eA (S) bei 23°C, 10°C und - 30°C bestimmt.

$a_n$: die Charpy-Schlagzähigkeit $a_n$ wurde an Norm-Kleinstäben nach ISO 179-2/lfU bei -30°C bestimmt.

Vicat: die Wärmeformbeständigkeit nach Vicat wurde an Preßplättchen nach ISO 306/B mit einer Belastung von 50 N und einer Aufheizrate von 50 K/h bestimmt.

$a_D$: die Durchstoßarbeit $a_D$ wurde nach ISO 6603-2 an Rundscheiben oder Rechteckscheiben 40 x 40 mm durch den Plastechontest bei - 30°C und 23°C bestimmt, wobei die Probekörper bei 220, 250 und 280°C Schmelzetemperatur hergestellt wurden.

Zugfestigkeit, Reißfestigkeit, Bruchdehnung und E-Modul: diese Werte wurden nach ISO 527 an Schulterstäben bei 23°C bestimmt.

Lichtstreuung und Absorption: aus dem Granulat wurden durch Spritzguß bei 240°C Schmelzetemperatur und 80°C Formtemperatur Stufenplättchen hergestellt, wobei die dünnere Stufe 1 mm und die dickere Stufe 2 mm dick war. Die Stufenplättchen wurden zur Bestimmung der Streuung und Absorption sowohl über weißem, als auch schwarzem Untergrund mit einem VIS-Spektralphotometer (Ultrascan der Fa. Hunter) vermessen. Mittels des BCS-Farbmeßsystems wurde aus diesen Messungen die spezifische Absorption und Streuung bei den Wellenlängen im Bereich von 400 bis 700 nm errechnet.

6. Ergebnisse der Messungen

Die Meßergebnisse fassen Tabellen 4 bis 7 zusammen. Die Tabellen 4 und 6 enthalten Abmischungen aus verschiedenen Komponenten A und verschiedenen Komponenten B. Tabelle 5 enthält Abmischungen der Komponente A8 mit verschiedenen Komponenten B.

Tabelle 7 enthält eine erfindungsgemäße Abmischung und zum Vergleich eine nicht erfindungsgemäße Formmasse mit gleichem Kautschukgehalt.

Tabelle 4: Abmischungen und Meßergebnisse. Die angegebenen Mengen der Komponenten sind Gew.-Teile

| Beispiel: | 1 | 2 | 3 | 4 | 5 | 6 |
|---|---|---|---|---|---|---|
| Komponente A | 31 A1 | 32 A2 | 33 A1 | 33 A2 | 33 A3 | 30 A4 |
| Komponente B | 69 B2 | 68 B1 | 67 B2 | 67 B2 | 67 B2 | 70 B2 |
| Gelbwert YI | 19,7 | 20,5 | 23,8 | 24,1 | 24,2 | 25,3 |
| Glanz [%] | 74 | 73 | 73 | 73 | 72 | 72 |
| $a_K$(23°C) [kJ/m²] | 24 | 21 | 23 | 24 | 25 | 21 |
| $a_K$(-30°C) [kJ/m²] | 10 | 9 | 11 | 12 | 12 | 12 |
| $a_n$(-30°C) [kJ/m²] | - | - | 180 | 180 | 164 | 155 |
| Vicat [°C] | 98 | 98 | 99 | 99 | 100 | 101 |
| MVR 220/10 2) [ml/10 min] | 12 | 11 | 5 | 5 | 5 | 5 |
| $a_D$(220°C/23°C) 1) [Nm] | 7 | 7 | 19 | 21 | 20 | 20 |
| $a_D$(220°C/-40°C) 1) [Nm] | 2 | 1 | 8 | 8 | 6 | 3 |
| $a_D$(250°C/23°C) 1) [Nm] | 14 | 7 | 22 | 22 | 23 | 20 |
| $a_D$(250°C/-40°C) 1) [Nm] | 5 | 3 | 13 | 15 | 16 | 15 |
| $a_D$(280°C/23°C) 1) [Nm] | 18 | 15 | 20 | 21 | 20 | 21 |
| $a_D$(280°C/-40°C) 1) [Nm] | 8 | 8 | 10 | 7 | 12 | 10 |

Fortsetzung Tabelle 4

| Beispiel: | 1 | 2 | 3 | 4 | 5 | 6 |
|---|---|---|---|---|---|---|
| Zugfestigkeit (23°C) [MPa] | 43 | 44 | 45 | 46 | 46 | 47 |
| Reißfestigkeit (23°C) [MPa] | 33 | 35 | 31 | 33 | 34 | 35 |
| Bruchdehnung (23°C) [%] | 8 | 8 | 7 | 7 | 7 | 6 |
| E-Modul (23°C) [MPa] | 2170 | 2200 | 2140 | 2120 | 2130 | 2170 |
| Streuung | 3,44 | 3,46 | - | - | - | - |
| Absorption [%] | 0,023 | 0,021 | - | - | - | - |

Fortsetzung Tabelle 4

| Beispiel: | 7 | 8 | 9 | 10 | 11 | 12 | 13 | 14 |
|---|---|---|---|---|---|---|---|---|
| Komponente A | 28,5 A1 | 23,5 A1 | 30 A1 | 43 A1 | 30 A6 | 30 A7 | 28 A1 | 26 A1 |
| Komponente B | 71,5 B1 | 76,5 B1 | 38 B1<br>32 B3 | 57 B2 | 70 B1 | 70 B1 | 72 B2 | 48 B1<br>26 B2 |
| Komponente F | | | | | | | 5 F1 | |
| Gelbwert YI | 19,8 | 15,5 | 24,5 | 20,8 | 22,3 | 22,4 | - | - |
| Glanz [%] | - | - | - | - | - | - | - | - |
| $a_K$(23°C) [kJ/m²] | 23 | 16 | 26 | 46 | 17 | 8 | 26 | 19 |
| $a_K$(-30°C) [kJ/m²] | 10 | 8 | 9 | 29 | 7 | 6 | 9 | 8 |
| $a_n$(-30°C) [kJ/m²] | 120 | 90 | 100 | 160 | 140 | 75 | 120 | 114 |
| Vicat [°C] | 97 | 99 | 101 | 93 | 97 | 95 | - | 98 |
| MVR 220/10[2)] [ml/10 min] | 19 | 24 | 9 | 4 | 17 | 19 | 10 | 15 |
| $a_D$(220°C/23°C)[1)] [Nm] | 16 | 2 | 9 | 19 | 21 | 4 | - | - |
| $a_D$(220°C/-30°C)[1)] [Nm] | 5 | - | 0,5 | 11 | 7 | 2 | - | - |
| $a_D$(250°C/23°C)[1)] [Nm] | 20 | 7 | 22 | 23 | 16 | 5 | - | 15 |
| $a_D$(250°C/-30°C)[1)] [Nm] | 7 | 8 | 4 | 18 | 8 | 3 | - | 5 |
| $a_D$(280°C/23°C)[1)] [Nm] | 25 | 20 | 22 | 23 | 21 | 25 | - | 8 |
| $a_D$(280°C/-30°C)[1)] [Nm] | 11 | 8 | 8 | 15 | 10 | 9 | - | 4 |

Fortsetzung Tabelle 4

| Beispiel: | 7 | 8 | 9 | 10 | 11 | 12 | 13 | 14 |
|---|---|---|---|---|---|---|---|---|
| Zugfestigkeit (23°) [MPa] | 47 | 51 | 48 | 39 | 50 | 46 | 47 | 48 |
| Reißfestigkeit (23°C) [MPa] | 40 | 40 | 38 | 28 | 39 | 38 | 40 | 38 |
| Bruchdehnung (23°C) [%] | 2,4 | 2,6 | 2,9 | 3,0 | 2,9 | 2,8 | 2,6 | 2,7 |
| E-Modul (23°C) [MPa] | 2270 | 2460 | 2210 | 1820 | 2340 | 2190 | 2400 | 2350 |
| Streuung | 3,30 | 3,15 | 3,18 | 3,67 | 3,14 | 3,12 | - | - |
| Absorption [%] | 0,023 | 0,023 | 0,033 | 0,029 | 0,026 | 0,026 | - | - |

1) Schmelzetemperatur/Prüftemperatur

2) Schmelzetemperatur [°C]/Belastung [Kg]

\- nicht bestimmt

Tabelle 5: Abmischungen und Meßergebnisse. Die angegebenen Mengen der Komponenten sind Gew.-Teile

| Beispiel | 15 | 16 | 17 | 18 | 19 | 20 | 21 |
|---|---|---|---|---|---|---|---|
| Komponente A8 | 25,5 | 33,0 | 38,4 | 49,3 | 41,0 | 31,1 | 40,0 |
| • aus K1a-Charge Nr. | 1 | 2 | 3 | 4 | 5 | 6 | 7 |
| • Quellungsindex der K1a-Charge | 31 | 36 | 28 | 35 | 27 | 28 | 39 |
| • $T_2$-Zeit der K1a-Charge [ms] | 3,15 | 3,53 | 3,25 | 3,29 | 3,26 | 3,28 | - |
| • Quellungsindex von A8 | 10,7 | 11,7 | 11,0 | 11,1 | 10,7 | 10,6 | - |
| Komponente B | 75,5 B1 | 67,0 B1 | 61,6 B1 | 50,7 B1 | 59,0 B2 | 68,9 B2 | 15,0 B1<br>45,0 B3 |
| Gelbwert YI | 18,8 | 20,1 | 19,0 | 21,9 | 18,4 | 18,7 | 27,4 |
| $a_K$ (250°C/23°C)[1] [kJ/m²] | 13 | 20 | 31 | 34 | 33 | 21 | 37 |
| $a_K$ (250°C/-30°C)[1] [kJ/m²] | 7 | 9 | 12 | 18 | - | - | 13 |
| Vicat [°C] | 98 | 96 | 94 | 88 | 96 | 100 | 101 |
| MVR 220/10[2] [ml/10 min] | 21 | 16 | 10 | - | 3 | 6 | - |
| MVR 220/21,6[2] [ml/10 min] | - | - | - | 23 | - | - | 10 |
| $a_D$ (250°C/23°C)[1] [N/m] | 7 | 36 | 32 | 40 | 33 | 35 | 29 |
| Lichtstreuung | 3,6 | 3,7 | 3,8 | - | 3,86 | 3,7 | - |
| Absorption [%] | 0,038 | 0,041 | 0,041 | - | 0,038 | 0,040 | - |

1) Schmelzetemperatur/Prüftemperatur
2) Schmelzetemperatur [°C]/Belastung [kg]
\- nicht bestimmt

Tabelle 6: Abmischungen und Meßergebnisse. Die angegebenen Mengen der Komponenten sind Gew.-Teile

| Beispiel | 22 | 23 | 24 | 25 | 26 | 27 |
|---|---|---|---|---|---|---|
| Komponente A | 28,5 A1 | 28,6 A10 | 27,6 A11 | 27,5 A12 | 27,3 A13 | 26,3 A14 |
| Komponente B | 71,5 B2 | 71,4 B2 | 72,4 B2 | 72,5 B2 | 72,7 B2 | 73,7 B2 |
| Gelbwert YI | 23,5 | 19,6 | 17,7 | 22,4 | 22,6 | 23,2 |
| $a_K$ (250°C/23°C)[1)] [kJ/m$^2$] | 24 | 20 | 21 | 24 | 20 | 23 |
| $a_K$ (250°C/-30°C)[1)] [kJ/m$^2$] | - | - | - | - | - | - |
| Vicat [°C] | 99 | 101 | 99 | 99 | 99 | 100 |
| MVR 220/10[2)] [ml/10 min] | 6 | 7 | 6 | 6 | 6 | 7 |
| MVR 220/21,6[2)] [ml/10 min] | - | - | - | - | - | - |
| $a_D$ (250°C/23°C)[1)] [N/m] | 38 | 36 | 39 | 33 | 36 | 37 |
| Lichtstreuung | 3,06 | 2,99 | 2,86 | 3,03 | 3,03 | 3,14 |
| Absorption [%] | 0,047 | 0,040 | 0,036 | 0,045 | 0,047 | 0,046 |

Fortsetzung Tabelle 6

| Beispiel | 28 | 29 | 30 | 31 | 32 | 33 |
|---|---|---|---|---|---|---|
| Komponente A | 27,0 A15 | 29,5 A16 | 27,6 A17 | 44,0 A18 | 45,4 A19 | 42,5 A20 |
| Komponente B | 73,0 B2 | 70,5 B1 | 72,4 B1 | 56,0 B1 | 54,6 B1 | 57,5 B1 |
| Gelbwert YI | 22,8 | 22,1 | 22,0 | 24,6 | 23,2 | 19,0 |
| $a_K$ (250°C/23°C)[1)] [kJ/$M_2$] | 23 | 22 | 22 | 37 | 30 | 11 |
| $a_K$ (250°C/-30°C)[1)] [kJ/$m^2$] | - | - | 8 | - | - | - |
| Vicat [°C] | 100 | 100 | 96 | - | - | - |
| MVR 220/10[2)] [ml/10 min] | 7 | 12 | 12 | - | - | - |
| MVR 220/21,6[2)] [ml/10 min] | - | - | - | 30 | 27 | 59 |
| $a_D$ (250°C/23°C)[1)] [N/m] | 38 | 43 | 22 | 29 | 28 | 25 |
| Lichtstreuung | 2,83 | 3,15 | 3,35 | - | - | - |
| Absorption [%] | 0,044 | 0,049 | 0,039 | - | - | - |

1) Schmelzetemperatur/Prüftemperatur
2) Schmelzetemperatur [°C]/Belastung [kg]
\- nicht bestimmt

Tabelle 7:

| Abmischungen und Meßergebnisse. Die angegebenen Mengen der Komponenten sind Gew.-Teile | | |
|---|---|---|
| Beispiel | 34 | 35V (Vergleich) |
| Komponente A | 29,9 A8 | 30,1 A5 |
| Komponente B | 70,1 B1 | 0 |
| Komponente D | 0 | 69,9 D1 |
| Gelbwert YI | 18,1 | 38,4 |
| $a_K$ (250°C/23°C)[1)] [kJ/m$^2$] | 21 | 17 |
| $a_K$ (250°C/10°C)[1)] [kJ/m$^2$] | 19 | 12 |
| $a_K$ (250°C/-30°C)[1)] [kJ/m$^2$] | 8 | 6 |
| Vicat [°C] | 97 | 99 |
| MVR 220/10[2)] [ml/10 min] | 18 | 16 |
| $a_D$ (250°C/23°C)[1)] [N/m] | 31 | 25 |
| Lichtstreuung | 3,6 | - |
| Absorption [%] | 0,036 | 0,080 |

1) Schmelzetemperatur/Prüftemperatur
2) Schmelzetemperatur [°c] / Belastung [kg]
- nicht bestimmt

Die Tabellen zeigen, daß die erfindungsgemäßen Formmassen eine geringe Eigenfarbe aufweisen (kleiner Gelbwert von unter 25 und Absorption unter 0,1 %) und gut einfärbbar sind (Lichtstreuung unter 4,9). Zugleich sind die erfindungsgemäßen Formmassen schlagzäh, auch in der Kälte (hohe Werte für $a_n$, $a_K$ und $a_D$), und lassen sich in ihrer Fließfähigkeit innerhalb eines weiten Bereiches einstellen (MVR-Werte).

Tabelle 7 gibt einen direkten Vergleich zweier Formmassen mit einem identischen Kautschukgehalt von 30 + 0,1 Gew.-%. Die erfindungsgemäße Formmasse des Beispiels 34 enthält als Matrixpolymer das SAN-Polymerisat B1 mit einem erfindungsgemäß niedrigen Acrylnitril-Gehalt von 25 Gew.-%. Die nicht erfindungsgemäße Formmasse des Beispiels 35V enthält anstelle des acrylnitrilarmen Polymeren B1 das acrylnitrilreiche Polymerisat D1 mit 33 Gew.-% Acrylnitril.

Die erfindungsgemäße Formmasse Beispiel 34 weist einen erheblich kleineren Gelbwert auf (18,1 statt 38,4) und hat zugleich eine deutlich bessere Schlagzähigkeit ($a_K$ 21/19/8 kJ/m$^2$ statt 17/12/6 kJ/m$^2$ bei 23/10/-30°C, $a_D$ 31 statt 25 N/m bei 23°C).

Verglichen mit den Formmassen des Standes der Technik ist die Schlagzähigkeit der erfindungsgemäßen Formmassen demnach nicht nur vergleichbar, sondern deutlich besser. Die erzielte Verminderung der Eigenfarbe geht also nicht einher mit einer Verschlechterung der mechanischen Eigenschaften, sondern im Gegenteil, mit deren Verbesserung.

## Patentansprüche

**1.** Thermoplastische Formmassen, enthaltend als Komponenten A) bis F),

A) 5 bis 80 Gew.-% eines Pfropfpolymerisates A) mit bimodaler Teilchengrößenverteilung aus, bezogen auf A),

a1) 40 bis 90 Gew.-% einer kautschukelastischen teilchenförmigen Pfropfgrundlage a1), erhältlich durch Polymerisation von, bezogen auf a1),

a11) 70 bis 100 Gew.-% mindestens eines konjugierten Diens,

a12) 0 bis 30 Gew.-% mindestens eines weiteren mono-ethylenischen ungesättigten Monomeren, und

a13) 0 bis 10, bevorzugt 0,01 bis 5 und besonders bevorzugt 0,02 bis 2 Gew.-% mindestens eines polyfunktionellen, vernetzenden Monomeren,

a2) 10 bis 60 Gew.-% einer Pfropfauflage a2) aus, bezogen auf a2),

a21) 65 bis 95 Gew.-% mindestens eines vinylaromatischen Monomeren,

a22) 5 bis 35 Gew.-% Acrylnitril,

a23) 0 bis 30 Gew.-% mindestens eines weiteren monoethylenisch ungesättigten Monomeren, und

a24) 0 bis 10, bevorzugt 0,01 bis 5 und besonders bevorzugt 0,02 bis 2 Gew.-% mindestens eines polyfunktionellen, vernetzenden Monomeren,

B) 20 bis 95 Gew.-% eines thermoplastischen Polymerisates B) mit einer Viskositätszahl VZ (ermittelt nach DIN 53726 bei 25°C, 0,5 Gew.-% in Dimethylformamid) von 50 bis 120 ml/g, aus, bezogen auf B),

b1) 69 bis 81 Gew.-% mindestens eines vinylaromatischen Monomeren

b2) 19 bis 31 Gew.-% Acrylnitril,

b3) 0 bis 30 Gew.-% mindestens eines weiteren, monoethylenisch ungesättigten Monomeren,

C) 0 bis 50 Gew.-% eines thermoplastischen Polymerisates C) mit einer Viskositätszahl VZ von 50 bis 120 ml/g, aus, bezogen auf C),

c1) 69 bis 81 Gew.-% mindestens eines vinylaromatischen Monomeren,

c2) 19 bis 31 Gew.-% Acrylnitril

c3) 0 bis 30 Gew.-% mindestens eines weiteren, monoethylenisch ungesättigten Monomeren,

wobei sich die Koponenten B) und C) in ihren Viskositätszahlen VZ um mindestens 5 Einheiten [ml/g] unterscheiden, oder sich in ihrem Acrylnitril-Gehalt um mindestens 5 Einheiten [Gew.-%] unterscheiden, oder sich in beiden Merkmalen Viskositatszahl VZ und Acrylnitril-Gehalt um mindestens 5 Einheiten unterscheiden,

D) 0 bis 95 Gew.-% eines thermoplastischen Polymerisates D) aus, bezogen auf D),

d1) 63 bis unter 69 Gew.-% mindestens eines vinylaromatischen Monomeren,

d2) über 31 bis 37 Gew.-% Acrylnitril,

d3) 0 bis 40 Gew.-% mindestens eines weiteren, monoethylenisch ungesättigten Monomeren,

E) 0 bis 50 Gew.-% eines thermoplastischen Polymerisates E) aus, bezogen auf E),

e1) 4 bis 96 Gew.-% mindestens eines vinylaromatischen Monomeren,

e2) 4 bis 96 Gew.-% mindestens eines Monomeren, ausgewählt aus Methylmethacrylat, Maleinsäureanhydrid und Maleinimiden,

e3) 0 bis 50 Gew.-% Acrylnitril,

wobei das Polymerisat E) von den Polymerisaten B) und, sofern enthalten, C) und D) verschieden ist,

F) 0 bis 50 Gew.-% Zusatzstoffe F),

erhältlich durch

1) Herstellen der Pfropfpolymerisate A) nach dem Verfahren der Emulsionspolymerisation,

2) Vermischen des Pfropfpolymerisates A) mit dem Polymerisat B), und, sofern enthalten, den weiteren Komponenten C), D), E) und/oder F), in einer Mischvorrichtung, wobei eine im wesentlichen schmelzflüssige Polymermischung entsteht,

3) schnelles Abkühlen der im wesentlichen schmelzflüssigen Polymermischung in einem Zeitraum von bis zu 10 sec.

**2.** Thermoplastische Formmassen nach Anspruch 1, in denen das konjugierte Dien a11) Butadien ist.

**3.** Thermoplastische Formmassen nach Anspruch 1 oder 2, in denen das vinylaromatische Monomer a21), und b1), sowie, sofern die Komponenten C), D) und/oder E) enthalten sind, c1), d1) und e1), Styrol oder $\alpha$-Methylstyrol, oder eine Mischung von Styrol und $\alpha$-Methylstyrol, ist.

**4.** Thermoplastische Formmassen nach den Ansprüchen 1 bis 3, in dem die Pfropfauflage a2) im wesentlichen aus, bezogen auf a2),

a21) 75 bis 85 Gew.-% Styrol und/oder $\alpha$-Methylstyrol

a22)15 bis 25 Gew.-% Acrylnitril
und das thermoplastische Polymerisat B) im wesentlichen aus, bezogen auf B),

b1) 71 bis 78 Gew.-% Styrol

b2) 22 bis 29 Gew.-% Acrylnitril

besteht.

**5.** Thermoplastische Formmassen nach den Ansprüchen 1 bis 4, in denen das monoethylenisch ungesättigte Monomer a12) Styrol oder n-Butylacrylat oder deren Mischung ist.

**6.** Thermoplastische Formmassen nach Anspruch 5, in denen ein Teil des Styrols in polymerisierter Form als Polystyrolsaatlatex vorliegt und ein anderer Teil des Styrols als monomeres Styrol einpolymerisiert wird.

**7.** Thermoplastische Formmassen nach den Ansprüchen 1 bis 6, bei denen die bimodale Teilchengrößenverteilung des Pfropfpolymerisates A) zwei Maxima aufweist, die bei Teilchengrößen von 25 bis 200 nm einerseits bzw. 150 bis 800 nm andererseits liegen.

**8.** Thermoplastische Formmassen nach den Ansprüchen 1 bis 7, bei denen die bimodale Teilchengrößenverteilung des Pfropfpolymerisates A) durch Agglomeration der Polymerteilchen erzielt wird.

**9.** Thermoplastische Formmassen nach den Ansprüchen 1 bis 8, bei denen im Verfahrensschritt 1) die Pfropfgrundlage a1) in Emulsion unter Verwendung mindestens eines Molekulargewichtsreglers hergestellt wird.

**10.** Thermoplastische Formmassen nach den Ansprüchen 1 bis 9, bei denen im Verfahrensschritt 1) die Pfropfauflage a2) in Emulsion unter Verwendung mindestens eines Molekulargewichtsreglers hergestellt wird.

**11.** Thermoplastische Formmassen nach den Ansprüchen 1 bis 10, bei denen die Pfropfauflage a2) polyfunktionelle vernetzende Monomere a24) enthält und in Emulsion unter Verwendung mindestens eines Molekulargewichtsreglers hergestellt wird.

**12.** Thermoplastische Formmassen nach den Ansprüchen 1 bis 11, in denen die Pfropfauflage a2) aus zwei Stufen unterschiedlicher Monomerzusammensetzung aufgebaut ist.

**13.** Thermoplastische Formmassen nach den Ansprüchen 1 bis 12, bei denen im Verfahrensschritt 1) ein wasserfeuchtes Propfpolymerisat A) erhalten wird, das bis zu 60 Gew.-%, bezogen auf A), Restwasser enthält.

**14.** Thermoplastische Formmassen nach den Ansprüchen 1 bis 13, bei denen im Verfahrensschritt 2) ein Extruder als Mischvorrichtung verwendet wird, wobei mindestens 30 Gew.-% des Restwassers des wasserfeuchten Propfpolymerisates A) im Extruder als flüssiges Wasser ausgepresst werden.

**15.** Thermoplastische Formmassen nach den Ansprüchen 1 bis 14, bei denen im Verfahrensschritt 3) zum schnellen Abkühlen das Verfahren der Unterwassergranulierung unter Verwendung von Wasser oder einer anderen Kühlflüssigkeit eingesetzt wird.

**16.** Thermoplastische Formmassen nach den Ansprüchen 1 bis 14, bei denen im Verfahrensschritt 3) die im wesentlichen schmelzflüssige Polymermischung unter Luft oder einem Schutzgas austritt und dann durch Inkontaktbringen mit Wasser oder einer anderen Kühlflüssigkeit schnell abgekühlt wird.

**17.** Verfahren zur Herstellung von thermoplastischen Formmassen gemäß den Ansprüchen 1 bis 16, **gekennzeichnet durch** die Verfahrensbedingungen von Anspruch 1.

**18.** Verwendung von thermoplastischen Formmassen gemäß den Ansprüchen 1 bis 16 zur Herstellung von Formkörpern.

**19.** Formkörper, hergestellt aus thermoplastischen Formmassen gemäß den Ansprüchen 1 bis 16.

## Claims

**1.** A thermoplastic molding composition comprising, as components A) to F),

A) from 5 to 80% by weight of a graft polymer A) having bimodal particle size distribution made from, based on A),

a1) from 40 to 90% by weight of an elastomeric particulate graft base a1), obtainable by polymerization of, based on a1),

a11) from 70 to 100% by weight of at least one conjugated diene,

a12) from 0 to 30% by weight of at least one other monoethylenically unsaturated monomer and

a13)from 0 to 10% by weight, preferably from 0.01 to 5% by weight, and particularly preferably from 0.02 to 2% by weight, of at least one polyfunctional, crosslinking monomer and

a2) from 10 to 60% by weight of a graft a2) made from, based on a2),

a21) from 65 to 95% by weight of at least one vinylaromatic monomer,

a22)from 5 to 35% by weight of acrylonitrile,

a23) from 0 to 30% by weight of at least one other monoethylenically unsaturated monomer, and

a24)from 0 to 10% by weight, preferably from 0.01 to 5% by weight, and particularly preferably from 0.02 to 2% by weight, of at least one polyfunctional, crosslinking monomer and

B) from 20 to 95% by weight of a thermoplastic polymer B) having a viscosity number VN (determined according to DIN 53726 at 25°C, 0.5% strength by weight in dimethylformamide) of from 50 to 120 ml/g, made from, based on B),

b1) from 69 to 81% by weight of at least one vinylaromatic monomer,

b2) from 19 to 31% by weight of acrylonitrile, and

b3) from 0 to 30% by weight of at least one other monoethylenically unsaturated monomer and

C) from 0 to 50% by weight of a thermoplastic polymer C) having a viscosity number VN of from 50 to 120 ml/g made from, based on C),

c1) from 69 to 81% by weight of at least one vinylaromatic monomer,

c2) from 19 to 31% by weight of acrylonitrile and

c3) from 0 to 30% by weight of at least one other monoethylenically unsaturated monomer,

where components B) and C) differ in their viscosity numbers VN by at least 5 units [ml/g], or in their acrylonitrile content by at least 5 units [% by weight], or in both characteristics, viscosity number VN and acrylonitrile content, by at least 5 units and

D) from 0 to 95% by weight of a thermoplastic polymer D) made from, based on D),

d1) from 63 to less than 69% by weight of at least one vinylaromatic monomer,

d2) from greater than 31 to 37% by weight of acrylonitrile and

d3) from 0 to 40% by weight of at least one other monoethylenically unsaturated monomer and

E) from 0 to 50% by weight of a thermoplastic polymer E) made from, based on E),

e1) from 4 to 96% by weight of at least one vinylaromatic monomer,

e2) from 4 to 96% by weight of at least one monomer selected from the class consisting of methyl methacrylate, maleic anhydride and maleimides and

e3) from 0 to 50% by weight of acrylonitrile,

where the polymer E) is different from the polymers B) and from C) and D) if they are present and

F) from 0 to 50% by weight of additives F),

obtainable by

1) preparing the graft polymer A) by emulsion polymerization,

2) mixing the graft polymer A) with the polymer B) and the other components C), D), E) and/or F) if they are present, in a mixing apparatus, giving an essentially molten polymer mixture, and

3) rapid cooling of the essentially molten polymer mixture within a period of up to 10 sec.

**2.** A thermoplastic molding composition as claimed in claim 1, in which the conjugated diene a11) is butadiene.

**3.** A thermoplastic molding composition as claimed in claim 1 or 2, in which the vinylaromatic monomer a21) and b1) and, if components C), D) and/or E) are present, c1), d1) and e1), is styrene or $\alpha$-methylstyrene or a mixture of styrene and $\alpha$-methylstyrene.

**4.** A thermoplastic molding composition as claimed in any of claims 1 to 3, in which the graft a2) consists essentially of, based on a2),

a21) from 75 to 85% by weight of styrene and/or $\alpha$-methylstyrene

a22) from 15 to 25% by weight of acrylonitrile
and the thermoplastic polymer B) consists essentially of, based on B),

b1) from 71 to 78% by weight of styrene

b2) from 22 to 29% by weight of acrylonitrile.

**5.** A thermoplastic molding composition as claimed in any of claims 1 to 4, in which the monoethylenically unsaturated monomer a12) is styrene or n-butyl acrylate or a mixture of these.

**6.** A thermoplastic molding composition as claimed in claim 5, in which an initial charge comprises some of the styrene in polymerized form as a polystyrene seed latex and another portion of the styrene is incorporated in the form of monomeric styrene by copolymerization.

**7.** A thermoplastic molding composition as claimed in any of claims 1 to 6, in which the bimodal particle size distribution of the graft polymer A) has two maxima, at particle sizes of from 25 to 200 nm on the one hand and from 150 to 800 nm on the other hand.

**8.** A thermoplastic molding composition as claimed in any of claims 1 to 7, in which the bimodal particle size distribution of the graft polymer A) is achieved by agglomerating the polymer particles.

**9.** A thermoplastic molding composition as claimed in any of claims 1 to 8, in which, in step 1), the graft base a1) is prepared in emulsion using at least one molecular weight regulator.

**10.** A thermoplastic molding composition as claimed in any of claims 1 to 9, in which, in step 1), the graft a2) is prepared in emulsion using at least one molecular weight regulator.

**11.** A thermoplastic molding composition as claimed in any of claims 1 to 10, in which the graft a2) comprises polyfunctional, crosslinking monomers a24), and is prepared in emulsion using at least one molecular weight regulator.

**12.** A thermoplastic molding composition as claimed in any of claims 1 to 11, in which the graft a2) is built up in two steps of different monomer make-up.

**13.** A thermoplastic molding composition as claimed in any of claims 1 to 12, in which process step 1) gives a graft polymer A) which is moist with water and contains up to 60% by weight, based on A), of residual water.

**14.** A thermoplastic molding composition as claimed in any of claims 1 to 13, in which process step 2) uses an extruder as mixing apparatus, and at least 30% by weight of the residual water in the moist graft polymer a) is pressed out in the extruder as liquid water.

**15.** A thermoplastic molding composition as claimed in any of claims 1 to 14, in which process step 3) employs the underwater granulation process for rapid cooling, using water or another cooling liquid.

**16.** A thermoplastic molding composition as claimed in any of claims 1 to 14, in which, in step 3), the essentially molten polymer mixture is discharged under air or under an inert gas, and then is cooled rapidly by coming into contact with water or with another coolant.

**17.** A process for preparing a thermoplastic molding composition as claimed in any of claims 1 to 16, wherein the process conditions are those of claim 1.

**18.** The use of a thermoplastic molding composition as claimed in any of claims 1 to 16 for producing moldings.

**19.** A molding produced from a thermoplastic molding composition as claimed in any of claims 1 to 11.

## Revendications

**1.** Masses de moulage thermoplastiques, contenant comme composants A) à F),

A) 5 à 80% en poids d'un polymère de greffage A) à distribution granulométrique bimodale, par rapport à A),

a1 ) 40 à 90% en poids d'une base de greffage a1) particulaire à élasticité de caoutchouc, que l'on peut obtenir par polymérisation de, par rapport à a1),

a11) 70 à 100% en poids d'au moins un diène conjugué,
a12) 0 à 30% en poids d'au moins un autre monomère monoéthyléniquement insaturé, et
a13) 0 à 10, de préférence de 0,01 à 5 et plus préférentiellement de 0,02 à 2% en poids d'au moins un monomère réticulant polyfonctionnel,

a2) 10 à 60% en poids d'une base de greffage a2) constituée de, par rapport à a2),

a21) 65 à 95% en poids d'au moins un monomère vinylaromatique,
a22) 5 à 35% en poids d'acrylonitrile,
a23) 0 à 30% en poids d'au moins un autre monomère monoéthyléniquement insaturé, et
a24) 0 à 10, de préférence 0,01 à 5 et plus préférentiellement 0,02 à 2% en poids d'au mains un monomère réticulant polyfonctionnel,

B) 20 à 95% en poids d'un polymère thermoplastique B) d'un indice de viscosité IV (calculé selon DIN 53726 à 25°C, 0,5% en poids dans le diméthylformamide) de 50 à 120 ml/g, constitué de, par rapport à B),

b1 ) 69 à 81% en poids d'au moins un monomère vinylaromatique,
b2) 19 à 31% en poids d'acrylonitrile,
b3) 0 à 30% en poids d'au moins un autre monomère monoéthyléniquement insaturé,

C) 0 à 50% en poids d'un polymère thermoplastique C) d'un indice de viscosité IV de 50 à 120 ml/g, constitué de, par rapport à C),

c1) 69 à 81% en poids d'au moins un monomére vinylaromatique,
c2) 19 à 31% en poids d'acrylonitrile,
c3) 0 à 30% en poids d'au moins un autre monomére monoéthyléniquement insaturé,

les composants B) et C) différant d'au moins 5 unités [ml/g] dans leurs indices de viscosité IV, ou différant d'au moins 5 unités [% en poids] dans leur teneur en acrylonitrile, ou différant d'au moins 5 unités tant dans l'indice de viscosité IV que dans la teneur en acrylonitrile,
D) 0 à 95% en poids d'un polymère thermoplastique D) constitué de, par rapport à D),

d1) 63 à moins de 69% en poids d'au moins un monomère vinylaromatique,
d2) plus de 31 à 37% en poids d'acrylonitrile,
d3) 0 à 40% en poids d'au moins un autre monomère éthyléniquement insaturé,

E) 0 à 50% en poids d'un polymère thermoplastique E) constitué de, par rapport à E),

e1) 4 à 96% en poids d'au moins un monomère vinylaromatique,
e2) 4 à 96% en poids d'au moins un monomère choisi parmi le méthacrylate de méthyle, ('anhydride maléique et des imides maléiques,
e3) 0 à 50% en poids d'acrylonitrile,

le polymère E) étant différent du polymère B) et, s'ils sont présents, de C) et D),
F) 0 à 50% en poids d'additifs F),

que l'on peut obtenir par

1) préparation du polymère de greffage A) par le procédé de polymérisation en émulsion,
2) mélange du polymère de greffage A) avec le polymère B) et, s'ils sont présents, les autres composants C), D), E) et/ou F), dans un dispositif de mélange, avec formation d'un mélange de polymères essentiellement en fusion,
3) refroidissement rapide du mélange de polymères essentiellement en fusion en un temps d'un maximum de 10 secondes.

**2.** Masses de moulage thermoplastiques selon la revendication 1, où le diène conjugué a11) est du butadiène.

**3.** Masses de moulage thermoplastiques selon la revendication 1 ou 2, dans lesquelles le monomère vinylaromatique

a21), et b1), ainsi que, dans la mesure où sont présents les composants C), D) eVou E), c1), d1) et e1), est du styrène ou de l'α-méthylstyrène, ou un mélange de styrène et d'α-méthylstyrène.

**4.** Masses de moulage thermoplastiques selon les revendications 1 à 3, dans lesquelles la base de greffage a2) est essentiellement constituée de, par rapport à a2):

a21) 75 à 85% en poids de styrène et/ou d'α-méthylstyrène,
a22) 15 à 25% en poids d'acrylonitrile,
et où le polymère thermoplastique B) est essentiellement constitué de, par rapport à B),
b1) 71 à 78% en poids de styrène
b2) 22 à 29% en poids d'acrylonitrile.

**5.** Masses de moulage thermoplastiques selon les revendications 1 à 4, dans lesquelles le monomère monoéthyléniquement insaturé a12) est du styrène ou de l'acrylate de n-butyle, ou leurs mélanges.

**6.** Masses de moulage thermoplastiques selon la revendication 5, où une partie du styrène est présente sous forme polymérisée en tant que latex de semence de polystyrène, et une autre partie du styrène est copolymérisée en tant que monomère de styrène.

**7.** Masses de moulage thermoplastiques selon les revendications 1 à 6, où la distribution granulométrique bimodale du polymère de greffage A) présente deux maxima pour des granulométries de 25 à 200 nm, d'une part, et de 150 à 800 nm, d'autre part.

**8.** Masses de moulage thermoplastiques selon les revendications 1 à 7, où la distribution granulométrique bimodale du polymère de greffage A) est obtenue par agglomération des particules de polymère.

**9.** Masses de moulage thermoplastiques selon les revendications 1 à 8, où dans l'étape 1) du processus, la base de greffage a1) est préparée en émulsion avec utilisation d'au moins un régulateur de poids moléculaire.

**10.** Masses de moulage thermoplastiques selon les revendications 1 à 9, où dans l'étape 1) du processus, la base de greffage a2) est préparée en émulsion avec utilisation d'au moins un régulateur de poids moléculaire.

**11.** Masses de moulage thermoplastiques selon les revendications 1 à 10, où la base de greffage a2) contient des monomères réticulants polyfonctionnels a24) et est préparée en émulsion avec utilisation d'au moins un régulateur de poids moléculaire.

**12.** Masses de moulage thermoplastiques selon les revendications 1 à 11, où la base de greffage a2) est constituée de deux étapes de compositions de monomères différentes.

**13.** Masses de moulage thermoplastiques selon les revendications 1 à 12, où dans l'étape 1) du processus, on obtient un polymère de greffage A) humide, qui contient jusqu'à 60%, par rapport à A), d'eau résiduelle.

**14.** Masses de moulage thermoplastiques selon les revendications 1 à 13, où dans l'étape 2) du processus, on utilise comme dispositif de mélange une extrudeuse, où au moins 30% en poids de l'eau résiduelle du polymère de greffage humide A) sont exprimés de l'extrudeuse sous forme d'eau liquide.

**15.** Masses de moulage thermoplastiques selon les revendications 1 à 14, où dans l'étape 3) du processus on met en oeuvre, pour le refroidissement rapide, le procédé de granulation en immersion en utilisant de l'eau ou un autre liquide de refroidissement.

**16.** Masses de moulage thermoplastiques selon les revendications 1 à 14, où dans l'étape 3) du processus, le mélange de polymères essentiellement en fusion sort sous atmosphère d'air ou d'un gaz inerte et est rapidement refroidi par mise en contact avec de l'eau ou un autre liquide de refroidissement.

**17.** Procédé de préparation de masses thermoplastiques selon les revendications 1 à 16, **caractérisé par** les conditions de processus selon la revendication 1.

**18.** Utilisation des masses thermoplastiques selon les revendications 1 à 16 pour le production de corps façonnés.

**19.** Corps façonnés produits à partir de masses thermoplastiques selon les revendications 1 à 16.